# EUROPEAN PATENT APPLICATION

(11) **EP 4 436 133 A1**
(43) Date of publication of application: **25.09.2024**
(21) Application number: 22914564.4
(22) Date of filing: 23.12.2022
(51) Int. Cl.: H04L 47/27

(54) **COMMUNICATION METHOD AND COMMUNICATION APPARATUS**

(30) Priority: 31.12.2021 CN 202111672827
(71) Applicant: Huawei Technologies Co., Ltd., Shenzhen, Guangdong 518129 (CN)
(72) Inventor: ZHU, Haoren, Shenzhen, Guangdong 518129 (CN); ZHU, Hualin, Shenzhen, Guangdong 518129 (CN); NI, Hui, Shenzhen, Guangdong 518129 (CN); XU, Yishan, Shenzhen, Guangdong 518129 (CN)
(74) Representative: Isarpatent
(86) International application number: PCT/CN2022/141566
(87) International publication number: WO 2023/125310

(57) **Abstract**

This application discloses a communication method and a communication apparatus. The method includes: An access network element receives first indication information from a session management function network element, and activates a congestion acquisition function of the access network element based on the first indication information, where the congestion acquisition function is for obtaining a congestion status of the access network element in a data flow transmission process of a target service. The access network element obtains the congestion status of the access network element, and sends first congestion information to a terminal device or a user plane function network element, where the first congestion information indicates the congestion status of the access network element. In this application, the access network element sends, to the user plane function network element or the terminal device, the first congestion information indicating the congestion status of the access network element. In this way, the congestion status of the access network element can be reported to a transmitter of a data flow of the target service, so that the transmitter can adjust a sending window of the data flow of the target service based on the congestion status of the access network element, thereby reducing a transmission delay of the data flow of the target service.

## Description

### CROSS-REFERENCE TO RELATED APPLICATIONS

This application claims priority to Chinese Patent Application No. 202111672827.3, filed with the China National Intellectual Property Administration on December 31, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Delay-sensitive applications can be classified into two types: computation-offloading applications and real-time synchronization applications. A basic feature of the computation-offloading applications is to offload a computation-intensive part from a terminal device to an edge cloud. The edge cloud obtains a computation result, and there is a real-time requirement on the computation result returned by the edge cloud. Examples of the computation-offloading applications include an automated guided vehicle (automated guided vehicle, AGV), tele-operated driving (tele-operated driving), cloud gaming (cloud gaming), cloud augmented reality (cloud augmented reality), an uncrewed aerial vehicle, a real-time video conference, augmented reality occlusion (augmented reality occlusion), and cloud virtual reality (cloud virtual reality). A basic feature of the real-time synchronization applications is to synchronize delay constraint data and information in a distributed system, and there is a high requirement on real-time synchronization. Examples of the real-time synchronization applications include multiplayer gaming and self-driving.

Delay stability is an important indicator of the delay-sensitive applications. How to improve delay stability to improve user experience is a focus of attention.

### SUMMARY

Embodiments of this application provide a communication method and a communication apparatus, to reduce a delay in a data transmission process.

According to a first aspect, an embodiment of this application provides a communication method. The method may be performed by an access network element, or may be performed by a component (for example, a chip or a chip system) of the access network element. In the method, the access network element receives first indication information from a session management function network element. The access network element activates a congestion acquisition function of the access network element based on the first indication information, where the congestion acquisition function is for obtaining a congestion status of the access network element in a data flow transmission process of a target service. The access network element obtains the congestion status of the access network element. The access network element sends first congestion information to a user plane function network element or a terminal device, and indicates the congestion status of the access network element based on the first congestion information.

Optionally, a transmitter of a data flow of the target service may be a terminal device, or may be an application function network element. For example, when the transmitter is the terminal device, the access network element sends the first congestion information to the terminal device. After receiving the first congestion information, the terminal device may adjust a sending window of the data flow of the target service based on the first congestion information. Alternatively, the access network element sends the first congestion information to the user plane function network element, and the user plane function network element sends the first congestion information to the application function network element after receiving the first congestion information. Then, the application function network element sends the first congestion information to the terminal device, so that the terminal device can adjust the send a sending window of the data flow of the target service based on the first congestion information. For another example, when the transmitter is the application function network element, the access network element sends the first congestion information to the terminal device, and the terminal device sends the first congestion information to the application function network element after receiving the first congestion information. The application function network element may adjust a sending window of the data flow of the target service based on the first congestion information. Alternatively, the access network element sends the first congestion information to the user plane function network element, and the user plane function network element sends the first congestion information to the application function network element after receiving the first congestion information. The application function network element may adjust a sending window of the data flow of the target service based on the first congestion information.

In the foregoing embodiment, the access network element activates the congestion acquisition function of the access network element in response to the first indication information of the session management function network element, that is, obtains the congestion status of the access network element in the data flow transmission process of the target service. Further, the access network element may send, to the user plane function network element or the terminal device, the first congestion information indicating the congestion status of the access network element. In this way, the congestion status of the access network element is reported to the transmitter of the data flow of the target service, so that the transmitter can adjust the sending window of the data flow of the target service based on the congestion status of the access network element, thereby reducing a transmission delay of the data flow of the target service and improving delay stability of the target service.

In a possible design, the method may further include: The access network element receives second congestion information from the user plane function network element; the access network element obtains a congestion status of the user plane function network element based on the second congestion information; and the access network element sends the second congestion information to the terminal device.

In the foregoing design, the access network element may further obtain the second congestion information of the user plane function network element, and send the second congestion information to the terminal device, to report the congestion status of the user plane function network element. This can reduce a transmission delay of the data flow of the target service, and can improve delay stability of the target service.

In a possible design, that the access network element obtains a congestion status of the user plane function network element based on the second congestion information may be: The access network element obtains the congestion status of the user plane function network element based on a receiving frequency of the second congestion information; or the second congestion information includes at least one of a congestion level of the user plane function network element or a data volume of a to-be-sent data flow in the user plane function network element.

In the foregoing design, the second congestion information may indicate the congestion status of the user plane function network element in a plurality of manners. An implementation is flexible.

In a possible design, that the access network element sends first congestion information to a terminal device may be: The access network element sends the first congestion information to the terminal device by using a media access control control element message or higher layer signaling.

In the foregoing design, the access network element may send the first congestion information to the terminal device by using a media access control layer or a higher layer. An implementation is flexible.

In a possible design, the method may further include: The access network element determines, based on a quality of service flow identifier of the target service, a correspondence between a quality of service flow identifier and a data radio bearer identifier, and a correspondence between a data radio bearer identifier and a logical channel identifier, a logical channel that carries the media access control control element message.

In the foregoing design, the access network element may use a logical channel corresponding to the target service to carry the media access control control element message including the first congestion information.

In a possible design, that the access network element indicates the congestion status of the access network element based on the first congestion information may be: The access network element indicates the congestion status of the access network element based on a sending of the first congestion information; or the first congestion information includes one or more of the following information: a congestion level of the access network element, a data volume of a to-be-transmitted data flow in the access network element, a channel quality indicator between the access network element and the terminal device, an air interface delay between the access network element and the terminal device, or a transmission mode in which the access network element transmits the data flow.

In the foregoing implementation, the first congestion information may indicate the congestion status of the access network element in a plurality of manners. An implementation is flexible.

In a possible design, the method may further include: The access network element activates a notification function of the access network element based on the first indication information, where the notification function of the access network element is for sending the congestion status of the access network element to the user plane function network element or the terminal device.

In the foregoing implementation, the access network element may activate the notification function, and send the first congestion information based on the notification function.

In a possible design, the method may further include: The access network element receives at least one of a first congestion obtaining manner or a first notification manner from the session management function network element; when the access network element receives the first congestion obtaining manner, the access network element determines, based on the first congestion obtaining manner, to obtain the congestion status of the access network element based on at least one of the data volume of the to-be-sent data flow in the access network element or usage of an air interface resource; and when the access network element receives the first notification manner, the access network element determines at least one of the following based on the first notification manner: to send the congestion status of the access network element to the user plane function network element or the terminal device when the data volume of the to-be-sent data flow is greater than or equal to a first threshold, to indicate the congestion status of the access network element based on the first congestion information, or a message that carries the first congestion information.

In the foregoing implementation, the access network element may determine, based on the first congestion acquisition manner, a manner of obtaining the congestion status of the access network element, and determine, based on the first notification manner, a manner of sending the first congestion information, to report the congestion status of the access network element.

In a possible design, that the access network element obtains the congestion status of the access network element may be: The access network element obtains the congestion status of the access network element based on at least one of the data volume of the to-be-sent data flow in the access network element or the usage of the air interface resource.

According to a second aspect, an embodiment of this application provides a communication method. The method may be performed by a user plane function network element, or may be performed by a component (for example, a chip or a chip system) of the user plane function network element. In the method, the user plane function network element receives second indication information from a session management function network element; the user plane function network element activates a congestion acquisition function of the user plane function network element based on the second indication information, where the congestion acquisition function is for obtaining a congestion status of the user plane function network element in a data flow transmission process of a target service; the user plane function network element obtains the congestion status of the user plane function network element; and the user plane function network element sends second congestion information to an application function network element or an access network element, and indicating the congestion status of the user plane function network element based on the second congestion information.

Optionally, a transmitter of a data flow of the target service may be a terminal device, or may be an application function network element. For example, when the transmitter is the terminal device, the user plane function network element sends the second congestion information to the access network element, and the access network element sends the second congestion information to the terminal device after receiving the second congestion information. The terminal device may adjust a sending window of the data flow of the target service based on the second congestion information. Alternatively, the user plane function network element sends the second congestion information to the application function network element, and the application function network element sends the second congestion information to the terminal device after receiving the second congestion information. Then, the terminal device may adjust a sending window of the data flow of the target service based on the second congestion information. For another example, when the transmitter is the application function network element, the user plane function network element sends the second congestion information to the access network element, and the access network element sends the second congestion information to the terminal device after receiving the second congestion information. Then, the terminal device sends the second congestion information to the application function network element, and the application function network element may adjust a sending window of the data flow of the target service based on the second congestion information. Alternatively, the user plane function network element sends the second congestion information to the application function network element, and the application function network element may adjust a sending window of the data flow of the target service based on the first congestion information after receiving the second congestion information.

In the foregoing embodiment, the user plane function network element activates the congestion acquisition function of the user plane function network element in response to the second indication information of the session management function network element, that is, obtains the congestion status of the user plane function network element in the data flow transmission process of the target service. Further, the user plane function network element may send, to the access network element or the application function network element, the second congestion information indicating the congestion status of the user plane function network element. In this way, the congestion status of the user plane function network element is reported to the transmitter of the data flow of the target service, so that the transmitter can adjust the sending window of the data flow of the target service based on the congestion status of the user plane function network element, thereby reducing a transmission delay of the data flow of the target service and improving delay stability of the target service.

In a possible design, the method may further include: The user plane function network element receives first congestion information from the access network element; the user plane function network element obtains a congestion status of the access network element based on the first congestion information; and the user plane function network element sends the first congestion information to the application function network element.

In the foregoing design, the user plane function network element may further obtain the first congestion information of the access network element, and send the first congestion information to the application function network element, to report the congestion status of the access network element. This can reduce a transmission delay of the data flow of the target service, and can improve delay stability of the target service.

In a possible design, that the user plane function network element obtains a congestion status of the access network element based on the first congestion information may be: The user plane function network element obtains the congestion status of the access network element based on a receiving frequency of the first congestion information; or the first congestion information includes one or more of the following information: a congestion level of the access network element, a data volume of a to-be-sent data flow in the access network element, a channel quality indicator of a channel between the access network element and the terminal device, an air interface delay between the access network element and the terminal device, or a transmission mode in which the access network element sends the data flow.

In a possible design, that the user plane function network element sends second congestion information to an application function network element may be: The user plane function network element sends the second congestion information to the application function network element based on a network exposure function network element, where the second congestion information includes identification information of the terminal device and identification information of the target service.

In the foregoing design, the user plane function network element may create a message that carries the second congestion information, and send the message to the application function network element based on the network exposure function network element.

In a possible design, the method may further include: that the user plane function network element sends second congestion information to an application function network element may be: The user plane function network element generates a first message that carries the second congestion information; and the user plane function network element sends the first message to the application function network element, where when the data flow is a downlink data flow, a source address of the first message is a destination address of the data flow, and a destination address of the first message is a source address of the data flow; when the data flow is a downlink data flow, a source address of the first message is a destination address of the data flow, and a destination address of the first message is an application function network element address configured by the application function network element; when the data flow is an uplink data flow, a source address of the first message is a source address of the data flow, and a destination address of the first message is a destination address of the data flow; or when the data flow is an uplink data flow, a source address of the first message is a source address of the data flow, and a destination address of the first message is an application function network element address configured by the application function network element.

In the foregoing design, regardless of the uplink data flow or the downlink data flow, the user plane function network element may determine, in a plurality of manners, the source address and the destination address of the first message that carries the second congestion information, to report the second congestion information.

In a possible design, that the user plane function network element sends second congestion information to an application function network element may be: When the data flow is a downlink data flow, the user plane function network element sends the second congestion information to the application function network element by using a reply message of the data flow; or
when the data flow is an uplink data flow, the user plane function network element sends the second congestion information to the application function network element by using an uplink packet that carries data of the target service.

In the foregoing design, the user plane function network element may use the reply message or the uplink packet to carry the second congestion information, for example, carry the second congestion information by additionally adding or modifying an element in a protocol header, without adding a new packet to carry the second congestion information. This can reduce consumption of network resources and improve network resource utilization.

In a possible design, that the user plane function network element indicates the congestion status of the user plane function network element by using the second congestion information may be:

The user plane function network element indicates the congestion status of the user plane function network element by using a sending frequency of the second congestion information; or
the second congestion information includes at least one of a congestion level of the user plane function network element or a data volume of a to-be-transmitted data flow in the user plane function network element.

In a possible design, the method may further include: The user plane function network element activates a notification function of the user plane function network element based on the second indication information, where the notification function of the user plane function network element is for sending the congestion status of the user plane function network element to the application function network element or the access network element.

In a possible design, the method may further include: The user plane function network element receives at least one of a second congestion obtaining manner or a second notification manner from the session management function network element; when the user plane function network element receives the second congestion obtaining manner, the user plane function network element determines, based on the second congestion obtaining manner, to obtain the congestion status of the user plane function network element based on the data volume of the to-be-transmitted data flow in the user plane function network element; and when the user plane function network element receives the second notification manner, the user plane function network element determines at least one of the following based on the second notification manner: to send the congestion status of the user plane function network element to the application function network element or the access network element when the data volume of the to-be-transmitted data flow is greater than or equal to a second threshold, to indicate the congestion status of the user plane function network element by using the second congestion information, or a message that carries the second congestion information.

In the foregoing implementation, the user plane function network element may determine, based on the second congestion obtaining manner, a manner of obtaining the congestion status of the user plane function network element, and determine, based on the second notification manner, a manner of sending the second congestion information, to report the congestion status of the user plane function network element.

In a possible design, the user plane function network element obtains the congestion status of the user plane function network element may be: The user plane function network element obtains the congestion status of the user plane function network element based on the data volume of the to-be-transmitted data flow in the user plane function network element.

According to a third aspect, an embodiment of this application provides a communication apparatus. The communication apparatus may be an access network element, and implements functions of the access network element in the first aspect or the possible design examples of the first aspect. The functions may be implemented by hardware, or may be implemented by hardware by executing corresponding software. The hardware or the software includes one or more modules corresponding to the foregoing functions.

In a possible design, a structure of the communication apparatus may include a communication module and a processing module. These modules may perform corresponding functions of the access network element in the first aspect or the possible design examples of the first aspect. For details, refer to detailed descriptions in the method examples. Details are not described herein again.

In a possible design, a structure of the communication apparatus may include an interface circuit and one or more processors. Optionally, the communication apparatus further includes a memory. The interface circuit is configured to receive and send data, and is configured to communicate and interact with another device in a communication system. The one or more processors are configured to support the communication apparatus in performing corresponding functions of the access network element in the first aspect or the possible design examples of the first aspect. The memory is coupled to the one or more processors, and stores program instructions and data that are necessary for the communication apparatus.

In a possible design, a structure of the communication apparatus may include a memory and one or more processors. The memory is coupled to the one or more processors. The memory is configured to store a computer program or instructions. When the computer program or the instructions are executed by the one or more processors, the communication apparatus is enabled to perform a corresponding function of the access network element in the first aspect or the possible design examples of the first aspect.

According to a fourth aspect, an embodiment of this application provides a communication apparatus. The communication apparatus may be a user plane function network element, and implements functions of the user plane function network element in the second aspect or the possible design examples of the second aspect. The functions may be implemented by hardware, or may be implemented by hardware by executing corresponding software. The hardware or the software includes one or more modules corresponding to the foregoing functions.

In a possible design, a structure of the communication apparatus may include a communication module and a processing module. These modules may perform corresponding functions of the user plane function network element in the second aspect or the possible design examples of the second aspect. For details, refer to detailed descriptions in the method examples. Details are not described herein again.

In a possible design, a structure of the communication apparatus may include an interface circuit and one or more processors. Optionally, the communication apparatus further includes a memory. The interface circuit is configured to receive and send data, and is configured to communicate and interact with another device in a communication system. The one or more processors are configured to support the communication apparatus in performing corresponding functions of the user plane function network element in the second aspect or the possible design examples of the second aspect. The memory is coupled to the one or more processors, and stores program instructions and data that are necessary for the communication apparatus.

In a possible design, a structure of the communication apparatus may include a memory and one or more processors. The memory is coupled to the one or more processors. The memory is configured to store a computer program or instructions. When the computer program or the instructions are executed by the one or more processors, the communication apparatus is enabled to perform a corresponding function of the user plane function network element in the second aspect or the possible design examples of the second aspect.

According to a fifth aspect, this application provides a communication system, including the communication apparatus in the third aspect and/or the communication apparatus in the fourth aspect.

According to a sixth aspect, this application provides a computer-readable storage medium, where the storage medium stores a computer program or instructions. When the computer program or the instructions are executed, the method according to any one of the first aspect or the designs of the first aspect may be implemented.

According to a seventh aspect, this application provides a computer-readable storage medium, where the storage medium stores a computer program or instructions. When the computer program or the instructions are executed, the method according to any one of the second aspect or the designs of the second aspect may be implemented.

According to an eighth aspect, this application provides a computer program product, where the computer program product includes a computer program (which may also be referred to as code or instructions). When the computer program is run, a computer is enabled to perform the method according to any one of the first aspect or the designs of the first aspect.

According to a ninth aspect, this application provides a computer program product, where the computer program product includes a computer program (which may also be referred to as code or instructions). When the computer program is run, a computer is enabled to perform the method according to any one of the second aspect or the designs of the second aspect.

According to a tenth aspect, this application provides a chip system. The chip system includes a processor and an interface, and is configured to support a communication apparatus in implementing the method according to any one of the first aspect or the designs of the first aspect.

In a possible design, the chip system further includes a memory. The memory is configured to store necessary information and data of the foregoing communication apparatus. The chip system may include a chip, or may include a chip and another discrete component.

According to an eleventh aspect, this application provides a chip system. The chip system includes a processor and an interface, and is configured to support a communication apparatus in implementing the method according to any one of the second aspect or the designs of the second aspect.

In a possible design, the chip system further includes a memory. The memory is configured to store necessary information and data of the foregoing communication apparatus. The chip system may include a chip, or may include a chip and another discrete component.

According to a twelfth aspect, this application further provides a communication system. The communication system includes one or more of an access network element and a core network element that are configured to perform the method according to any one of the first aspect or the designs of the first aspect and the method according to any one of the second aspect or the designs of the second aspect.

For beneficial effects brought by the fourth aspect to the twelfth aspect, refer to descriptions of beneficial effects in the first aspect to the third aspect. Details are not described herein again.

### BRIEF DESCRIPTION OF DRAWINGS

FIG. 1a is a schematic diagram of a 5G network architecture based on a service-based architecture;
FIG. 1b is a schematic diagram of a 5G network architecture based on a point-to-point interface;
FIG. 1c is another schematic diagram of a 5G network architecture based on a point-to-point interface;
FIG. 2 is a schematic flowchart of a communication method according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of still another communication method according to an embodiment of this application;
FIG. 9 is a diagram of a structure of another communication apparatus according to an embodiment of this application; and
FIG. 10 is a diagram of a structure of another communication apparatus according to an embodiment of this application.

### DESCRIPTION OF EMBODIMENTS

Embodiments of this application provide a communication method and a communication apparatus, to report a congestion status of a network bottleneck node to a data transmitter, so that the data transmitter can adjust a sending window based on the congestion status, thereby reducing a delay in a data transmission process and improving delay stability. The method and the device are based on a same technical idea. The method and the apparatus have similar principles for problem resolution. Therefore, for implementations of the device and the method, reference may be made to each other, and details of repeated parts are not described again.

It should be noted that in embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. "A plurality of in this application means two or more. "At least one" means one or more.

In addition, it should be understood that in descriptions of this application, terms such as "first" and "second" are merely used for distinguishing and description, but should not be understood as indicating or implying relative importance, or should not be understood as indicating or implying a sequence.

The following first describes an application scenario to which embodiments of this application are applicable.

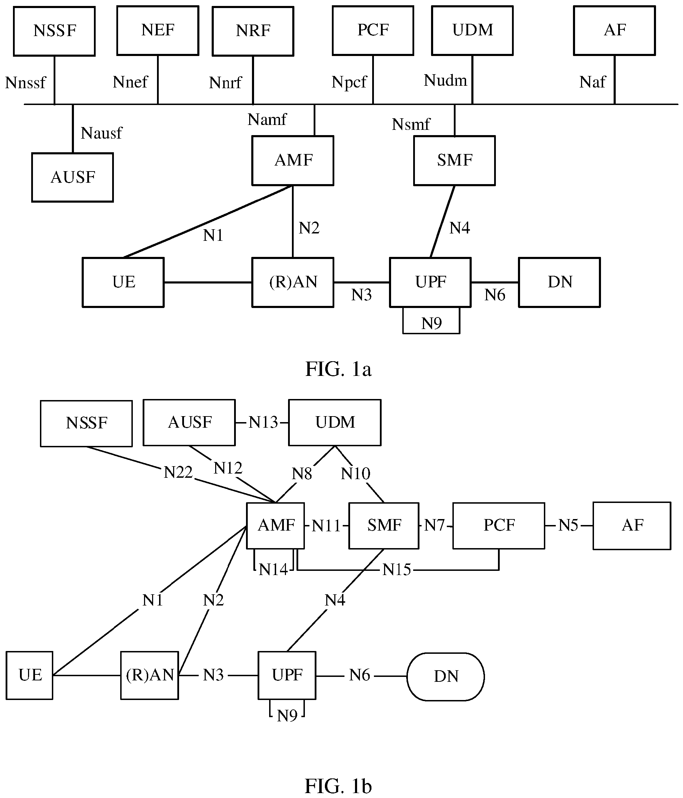

FIG. 1a is a schematic of a network architecture according to an embodiment of this application. As shown in FIG. 1a, the network architecture may include user equipment, a (radio) access network device, a user plane network element, a data network, an authentication server, a mobility management network element, a session management network element, an application network element, a unified data management network element, a policy control network element, a network function repository function network element, a network exposure network element, a network slice selection function network element, and the like. The following separately describes the network elements in the network architecture.
1. User equipment (user equipment, UE): The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

2. (Radio) access network device (radio access network, (R)AN): The access network device may also be referred to as an access device, an access network element, or the like. The (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device with a wireless transceiver function for communicating with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, the gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated into PHY layer information by using the PHY layer of the DU, or is converted from information at the PHY layer. Therefore, in this architecture, higher layer signaling (for example, RRC layer signaling) may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. The user plane network element is used as an interface to a data network, and implements functions such as user plane data forwarding, session/flow-level charging statistics, and bandwidth restriction, that is, packet routing and forwarding, quality of service (quality of service, QoS) processing on user plane data, and the like.

In a 5G communication system, the user plane network element may be a user plane function (user plane function, UPF) network element.

4. The data network provides services such as carrier services, internet access, or third-party services and includes servers. The servers implement video source encoding and rendering. In the 5G communication system, the data network may be a data network (data network, DN).

5. The authentication server performs user security authentication. In the 5G communication system, the authentication server may be an authentication server function (authentication server function, AUSF) network element.

6. The mobility management network element is mainly for mobility management, access management, and the like. In the 5G communication system, the access management network element may be an access and mobility management function (access and mobility management function, AMF), and mainly performs functions such as mobility management and access authentication/authorization. In addition, the mobility management network element is further responsible for transferring a user policy between a terminal and the policy control function (policy control function, PCF).

7. The session management network element is mainly configured to perform session management, allocate and manage an internet protocol (internet protocol, IP) address of user equipment, select a manageable user plane function, serve as a termination point of a policy control and charging function interface, perform downlink data notification, and the like.

In the 5G communication system, the session management network element may be a session management function (session management function, SMF) network element, and completes IP address allocation to a terminal, UPF network element selection, charging and QoS policy control, and the like.

8. Application network element: In the 5G communication system, the application network element may be an application function (application function, AF) network element, represents an application function of a third party or an operator, is an interface for obtaining external application data in a 5G network, and is mainly configured to transfer a requirement of an application side for a network side.

9. The unified data management network element is responsible for management of a user identifier, subscription data, and authentication data, and registration management of a serving network element of a user. In the 5G communication system, the unified data management network element may be unified data management (unified data management, UDM).

10. The policy control network element includes a user subscription data management function, a policy control function, a charging policy control function, quality of service (quality of service, QoS) control, and the like, is a unified policy framework for guiding network behavior, and provides policy rule information and the like for a control plane function network element (for example, an AMF network element or an SMF network element).

In the 5G communication system, a policy control network element may be a PCF network element.

11. The network function repository function network element provides a function of storing and selecting network function entity information for another core network element. In the 5G communication system, the network element may be a network function repository function (network function repository function, NRF) network element.

12. Network exposure network element: In the 5G communication system, the network exposure network element may be a network exposure function (network element function, NEF) network element, is mainly configured to expose a service and a capability of a 3rd generation partnership project (3rd generation partnership project, 3GPP) network function to an AF network element, and may enable the AF network element to provide information for the 3GPP network function.

13. The network slice selection function network element is responsible for selecting a network slice for UE. In the 5G communication system, the application network element may be a network slice selection function (network slice selection function, NSSF) network element.

In FIG. 1a, Nnssf, Nausf, Nnef, Nnrf, Namf, Npcf, Nsmf, Nudm, Naf, N1, N2, N3, N4, and N6 are interface numbers. For meanings of the interface numbers, refer to meanings defined in a 3GPP standard protocol. This is not limited herein.

FIG. 1b is a schematic diagram of a 5G network architecture based on a point-to-point interface. For descriptions of functions of network elements in the figure, refer to descriptions of functions of corresponding network elements in FIG. 1a. Details are not described again. A main difference between FIG. 1b and FIG. 1a lies in that an interface between network elements in FIG. 1b is a point-to-point interface, and an interface between network elements in FIG. 1a is a service-based interface.

In FIG. 1b, N1, N2, N3, N4, N5, N6, N7, N8, N9, N10, N11, N12, N13, N14, and N22 are interface numbers. For meanings of the interface numbers, refer to meanings defined in a 3GPP standard protocol. This is not limited herein.

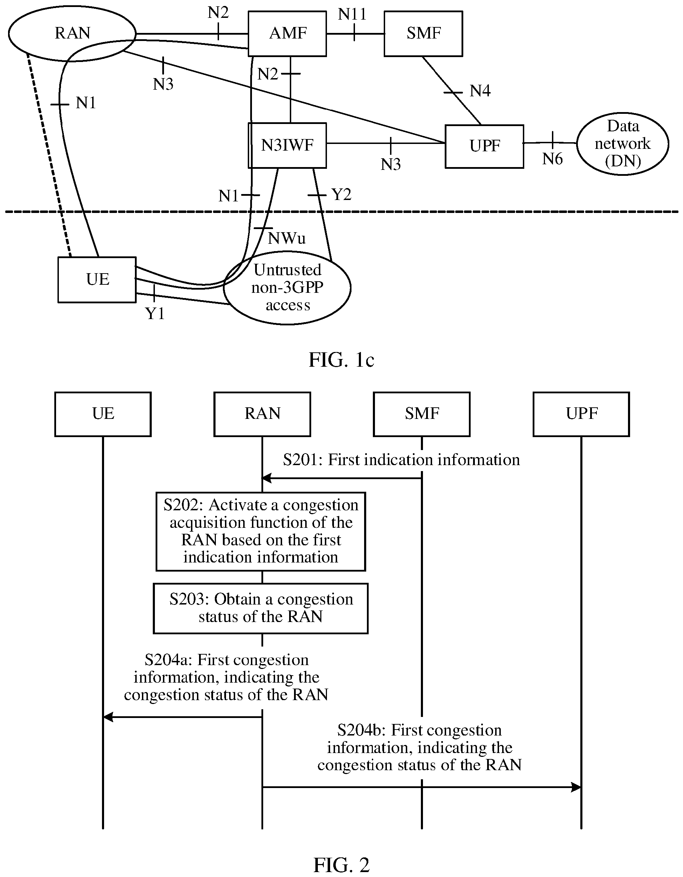

When a 5G core network supports untrusted non-3GPP access, a 5G network architecture based on a point-to-point interface is shown in FIG. 1c. An access network includes a 3GPP access network and a non-3GPP (Non-3GPP) access network. An access device in the 3GPP access network may be referred to as a RAN. An access device in the non-3GPP access network may be referred to as a non-3GPP interworking function (Non-3GPP interworking function, N3IWF) device. The N3IWF device may include, for example, a router.

It should be noted that, when the 5G core network supports trusted non-3GPP access, a 5G network architecture of the 5G core network is similar to that in FIG. 1c. The untrusted non-3GPP access in FIG. 1c may be replaced with trusted non-3GPP access, and the N3IWF may be replaced with a trusted non-3GPP access gateway.

In FIG. 1c, N1, N2, N3, N4, N6, N11, NWu, Y1, and Y2 are interface numbers. For meanings of the interface numbers, refer to meanings defined in a 3GPP standard protocol. This is not limited herein.

It may be understood that the foregoing function network element may be a network element in a hardware device, may be a software function running on dedicated hardware, or may be a virtualization function instantiated on a platform (for example, a cloud platform). The function network element may be divided into one or more services, and further, a service independent of a network function may exist. In this application, an instance of the function network element, an instance of a service included in the function network element, or a service instance independent of the network function may be referred to as a service instance.

The foregoing describes the application scenario to which embodiments of this application are applicable. The following describes, with reference to the accompanying drawings, a communication method provided in embodiments of this application.

An embodiment of this application provides a communication method. The method may be applied to the communication scenario shown in FIG. 1a, FIG. 1b, or FIG. 1c. The access network element, the session management function network element, the user plane function network element, and the terminal device in embodiments of this application may be respectively the RAN, the SMF, the UPF, and the UE in FIG. 1a, FIG. 1b, or FIG. 1c, or may be network elements that have functions of the RAN, the SMF, the UPF, and the UE in a future communication network such as a 6th generation (6th generation, 6G) network. This is not limited in embodiments of this application. For ease of description, in this embodiment of this application, an example in which the access and mobility management network element, the unified data management network element, and the user plane network element are respectively the RAN, the SMF, the UPF, and the UE is used for description. Further, an example in which the terminal is UE is used for description in this application.

FIG. 2 is a schematic flowchart of a communication method according to an embodiment of this application. In this embodiment, a RAN obtains a congestion status of the RAN, and sends first congestion information to a UPF network element or UE.

S201: An SMF network element sends first indication information to the RAN. Correspondingly, the RAN receives the first indication information.

The first indication information may indicate to activate (or trigger) a congestion acquisition function of the RAN. The congestion acquisition function is for obtaining the congestion status of the RAN in a data flow transmission process of a target service. Optionally, the first indication information may further indicate to activate a notification function of the RAN, and the notification capability is for sending the congestion status of the RAN. It should be understood that indication of activating the congestion acquisition function of the RAN and indication of activating the notification function of the RAN may be same indication information, or may be different indication information. This is not limited in this embodiment of this application. In addition, the target service may be a delay-sensitive service, or may be a delay-insensitive service. This is not limited in this embodiment of this application. A data flow of the target service may come from the UE, that is, a transmitter of the data flow of the target service is the UE, or come from an AF network element, that is, a transmitter of the data flow of the target service is the AF network element.

For example, the SMF network element may send the first indication information to an AMF network element by using a service-based message, and then the AMF network element sends the first indication information to the RAN by using an N2 message. The service-based message may be, for example, an Namf communication N1 N2 message transfer (Namf_communication_N1 N2 message transfer) message. However, this is not limited in this embodiment of this application. An N2 SM message in the service-based message may include the first indication information. Optionally, the N2 SM message may further include a QoS flow identifier (QoS flow ID, QFI) of the target service. For example, the SMF network element may determine, based on a local configuration (for example, a requirement of the target service), to activate the congestion obtaining function of the RAN for the target service, or determine to activate the congestion obtaining function and the notification function of the RAN for the target service. For another example, based on an authorized quality of service monitoring policy (authorized QoS monitoring policy) of the target service from a PCF network element, the SMF may determine to activate the congestion obtaining function of the RAN for the target service, or determine to activate the congestion obtaining function and the notification function of the RAN for the target service. Further, the SMF network element includes the first indication information in the service-based message, and sends the service-based message to the AMF network element. After receiving the service-based message, the AMF network element sends the N2 SM message in the service-based message to the RAN by using the N2 message. Correspondingly, the RAN receives the N2 SM message, to obtain the first indication information.

The first indication information may be represented by using an information element (information element, IE) or a field newly added to the N2 SM message, or may be represented by using a reserved IE or field in the N2 SM message (that is, represented by using a reserved bit in the N2 SM message). This is not limited in this embodiment of this application.

It should be noted that, when the first indication information is indication information indicating to activate the congestion obtaining function of the RAN, the congestion obtaining function may be understood as: obtaining the congestion status of the RAN in the data flow transmission process of the target service, and reporting the obtained congestion status.

In a possible implementation, the SMF network element may send a first congestion obtaining manner (which may be referred to as behavior of the RAN, for example, denoted as action for RAN), a first notification manner (which may be referred to as a RAN reporting event, for example, denoted as report events), or the first congestion obtaining manner and the first notification manner to the RAN. Correspondingly, the RAN receives the first congestion obtaining manner, receives the first notification manner, or receives the first congestion obtaining manner and the first notification manner. The first congestion obtaining manner is for determining a manner of obtaining the congestion status of the RAN. The first notification manner is for determining one or more of a condition for reporting the congestion status of the RAN, a manner of reporting the congestion status of the RAN, and reported content. It should be understood that the first congestion obtaining manner and the first indication information may be carried in a same message, or may be carried in different messages. Similarly, the first notification manner and the first indication information may be carried in a same message, or may be carried in different messages. This is not limited in this embodiment of this application.

In an example, the first congestion obtaining manner may indicate one or more of the following:
1. Obtaining the congestion status of the RAN based on a data volume of a to-be-transmitted data flow in the RAN

The data volume of the to-be-transmitted data flow may be one or more of the following: a length of a to-be-transmitted data flow in a queue, a length of a to-be-transmitted data flow in a buffer (buffer), a data proportion of the to-be-transmitted data flow in the queue, a data proportion of the to-be-transmitted data flow in the buffer, an increase of the length or the data proportion of the to-be-transmitted data flow in the queue, an increase of the length or the data proportion of the to-be-transmitted data flow in the buffer, and the like. The congestion status of the RAN may be a current congestion status of the RAN, may be a congestion status of the RAN within future specified duration, or may be a congestion status of the RAN within current and future specified duration. For example, the first congestion obtaining manner may indicate to obtain the current congestion status of the RAN based on the length or the data proportion of the to-be-transmitted data flow in the queue (or the buffer). For another example, the first congestion obtaining manner may indicate to obtain the congestion status of the RAN within the future specified duration based on the increase of the length or the data proportion of the to-be-transmitted data flow in the queue (or the buffer). For still another example, the first congestion obtaining manner may indicate to obtain the congestion status of the RAN within the current and future specified duration based on the length or the data proportion of the to-be-transmitted data flow in the queue (or the buffer) and the increase of the length or the data proportion of the to-be-sent data flow in the queue (or the buffer). In addition, the queue may be a queue at a radio link layer control (radio link control, RLC) protocol layer of the RAN, or a queue at another protocol layer, for example, a queue at a packet data convergence protocol (packet data convergence protocol, PDCP) layer, or a queue at a service data adaptation protocol (service data adaptation protocol, SDAP) layer.

### 2. Obtaining the congestion status of the RAN based on usage of an air interface resource of the RAN

For example, the first congestion acquisition manner may indicate to obtain a current congestion status of the RAN or a congestion status of the RAN within future specified duration based on the usage of the air interface resource of the RAN. The usage of the air interface resource of the RAN may be, for example, a channel quality indicator (channel quality indicator, CQI) of a channel between the RAN and the UE. However, this is not limited in this embodiment of this application.

In the foregoing example, the RAN may determine, based on the first congestion acquisition manner, the manner of obtaining the congestion status of the RAN. In other words, the RAN may determine, based on the first congestion acquisition manner, to obtain the congestion status of the RAN based on at least one of the data volume of the to-be-sent data flow in the RAN or the usage of the air interface resource of the RAN.

In an example, the first notification manner may indicate one or more of the following:

### 1. First threshold

The first threshold may be understood as a trigger condition for the RAN to report the congestion status of the RAN. For example, when the data volume of the to-be-sent data flow in the RAN is greater than or equal to the first threshold, the RAN sends the congestion status of the RAN. The first threshold may be a length threshold corresponding to a queue, a length threshold corresponding to a buffer, a data proportion threshold corresponding to the queue, a data proportion threshold corresponding to the buffer, an increase threshold of the length or the data proportion corresponding to the queue, an increase threshold of the length or the data proportion corresponding to the buffer, or the like. This is not limited in this embodiment of this application.

### 2. Sending the congestion status of the RAN

That the first notification manner indicates to send the congestion status of the RAN may be understood as that the RAN may send the congestion status of the RAN after obtaining the congestion status of the RAN. Further, the first notification manner may further indicate to send the congestion status of the RAN to the UE or the UPF network element.

### 3. Indicating the congestion status of the RAN based on the first congestion information

That the first notification manner indicates the congestion status of the RAN based on the first congestion information may be understood as indicating content reported by the RAN. For example, the first notification manner indicates the congestion status of the RAN based on a sending frequency of the first congestion information, indicates the congestion status of the RAN by using content included in the first congestion information, or indicates the congestion status of the RAN based on the sending frequency of the first congestion information and the content included in the first congestion information.

For example, the sending frequency of the first congestion information may indicate the congestion status of the RAN. The first congestion information may be, for example, a fixed IE or field, one or more bits, or one or more bytes. This is not limited in this embodiment of this application. In this case, the transmitter or a receiver of the data flow of the target service may determine the congestion status of the RAN by collecting statistics on an amount of first congestion information received in a unit time.

Table 1 schematically shows the sending frequency of the first congestion information by using the length of the to-be-sent data flow in the queue or the buffer in the RAN as an example. As shown in Table 1, when the length of the to-be-sent data flow in the queue or the buffer is within a range 1, the sending frequency of the first congestion information is a frequency 1; when the length of the to-be-sent data flow in the queue or the buffer is within a range 2, the sending frequency of the first congestion information is a frequency 2; or when the length of the to-be-sent data flow in the queue or the buffer is within a range 3, the sending frequency of the first congestion information is a frequency 3. Optionally, a larger length of the to-be-sent data flow in the queue or the buffer in the RAN indicates a higher sending frequency of the first congestion information. It should be understood that Table 1 is merely an example, and does not limit the sending frequency of the first congestion information.

**Table 1**

| Length of a to-be-sent data flow in a queue or a buffer | Sending frequency of the first congestion information |
|---|---|
| Range 1 | Frequency 1 |
| Range 2 | Frequency 2 |
| Range 3 | Frequency 3 |

Table 2 schematically shows the sending frequency of the first congestion information by using the CQI between the RAN and the UE as an example. As shown in Table 2, when the CQI between the RAN and the UE is within a range 1, the sending frequency of the first congestion information is a frequency 1; when the CQI between the RAN and the UE is within a range 2, the sending frequency of the first congestion information is a frequency 2; or when the CQI between the RAN and the UE is within a range 3, the sending frequency of the first congestion information is a frequency 3. Optionally, a larger CQI between the RAN and the UE indicates a higher sending frequency of the first congestion information. It should be understood that Table 2 is merely an example, and does not limit the sending frequency of obtaining the first congestion information.

**Table 2**

| CQI | Sending frequency of the first congestion information |
|---|---|
| Range 1 | Frequency 1 |
| Range 2 | Frequency 2 |
| Range 3 | Frequency 3 |

Optionally, the amount of first congestion information received in the unit time may correspond to a preset congestion level. For example, a larger amount of first congestion information received in the unit time indicates a higher congestion level corresponding to the amount of first congestion information.

For example, the content included in the first congestion information may indicate the congestion status of the RAN. For example, the first congestion information may include but is not limited to one or more of the following information:
(1) Congestion level of the RAN
   The congestion level of the RAN may be a current congestion level, a congestion level within predicted future specified duration, or a congestion level within current and future specified duration. The congestion level may be predefined, preconfigured, or the like. This is not limited in this embodiment of this application. In addition, a higher congestion level indicates severer congestion.
(2) Data volume of the to-be-sent data flow in the RAN
   The data volume of the to-be-sent data flow may be one or more of the following: the length of the to-be-sent data flow in the queue, the length of the to-be-sent data flow in the buffer (buffer), the data proportion of the to-be-sent data flow in the queue, the data proportion of the to-be-sent data flow in the buffer, the increase of the length or the data proportion of the to-be-sent data flow in the queue, the increase of the length or the data proportion of the to-be-sent data flow in the buffer, and the like.
(3) CQI between the RAN and the UE
   The CQI between the RAN and the UE may be a current CQI between the RAN and the UE, a predicted CQI between the RAN and the UE in future specified duration, or a CQI between the RAN and the UE within current and future specified duration.
(4) Air interface delay between the RAN and the UE
   The air interface delay between the RAN and the UE may be a current air interface delay, or an air interface delay within predicted future specified duration, or an air interface delay within current and future specified duration. The air interface delay may be, for example, a retransmission delay at an RLC layer, a retransmission delay at a media access control (media access control, MAC) layer, or the retransmission delay at the RLC layer and the retransmission delay at the MAC layer. This is not limited in this embodiment of this application.
(5) Transmission mode in which the RAN sends the data flow of the target service
   The transmission mode in which the RAN sends the data flow of the target service may be a current transmission mode in which the RAN sends the data flow of the target service, a transmission mode in which the RAN sends the data flow of the target service within future specified duration, or a transmission mode in which the RAN sends the data flow of the target service within current and future specified duration. The transmission mode may be, for example, one or more of an air interface standard, a frequency band, a transmission technology, and the like. The transmission technology may be, for example, carrier aggregation (carrier aggregation, CA) or multiple-input multiple-output mode (multiple-input multiple-output mode, MIMO).

### 4. Message that carries the first congestion information

That the first notification manner indicates the message that carries the first congestion information may be understood as a manner of indicating the RAN to report the first congestion information. In this embodiment, the message that carries the first congestion information may be, for example, an N3 message, a media access control control element (media access control-control element, MAC-CE) message, or higher layer signaling. This is not limited in this embodiment of this application. The N3 message may be, for example, an N3 notification (N3 notification) message. This is not limited in this embodiment of this application. The higher layer signaling may be, for example, radio resource control (radio resource control, RRC) signaling, PDCP signaling, or SDAP signaling. For example, when the first notification manner indicates to report the first congestion information by using the N3 message, the RAN may send the first congestion information to the UPF network element based on the first notification manner by using the N3 message. For another example, when the first notification manner indicates to report the first congestion information by using the MAC-CE message, the RAN may send the first congestion information to the UE based on the first notification manner by using the MAC-CE message. For still another example, when the first notification manner indicates to report the first congestion information by using the higher layer signaling, the RAN may send the first congestion information to the UE based on the first notification manner by using the higher layer signaling.

In the foregoing example, the RAN may determine a reporting condition of the first congestion information, a reporting manner of the first congestion information, reported content, and the like based on the first notification manner. To be specific, the RAN may determine at least one of the following based on the first notification manner: to send the congestion status of the RAN to the UPF network element or the UE when the data volume of the to-be-sent data flow is greater than or equal to the first threshold, to indicate the congestion status of the RAN based on the first congestion information, or the message that carries the first congestion information.

In the foregoing descriptions, the first indication information may be represented by using the newly added IE or field in the N2 SM message, or may be represented by using the reserved IE or field in the N2 SM message. In other words, the SMF network element explicitly indicates the RAN to activate the congestion acquisition function of the RAN. In another possible implementation, the SMF network element may implicitly indicate the RAN to activate the congestion acquisition function of the RAN. For example, the SMF network element may indicate, in the first congestion acquisition manner, the first notification manner, or the first congestion acquisition manner and the first notification manner, the RAN to activate the congestion acquisition function of the RAN. For example, the SMF network element sends the first congestion acquisition manner to the RAN. After receiving the first congestion acquisition manner, the RAN activates the congestion acquisition function of the RAN, obtains the congestion status of the RAN based on the first congestion acquisition manner in the data flow transmission process of the target service, and reports the congestion status of the RAN. For another example, the SMF network element sends the first notification manner to the RAN. After receiving the first notification manner, the RAN activates the congestion acquisition function of the RAN, obtains the congestion status of the RAN in the data flow transmission process of the target service, and reports the congestion status of the RAN based on the first notification manner. For still another example, the SMF network element sends the first congestion acquisition manner and the first notification manner to the RAN. After receiving the first congestion acquisition manner and the first notification manner, the RAN activates the congestion acquisition function of the RAN, obtains the congestion status of the RAN based on the first congestion acquisition manner in the data flow transmission process of the target service, and reports the congestion status of the RAN based on the first notification manner. For ease of understanding, an example in which the SMF network element sends the first indication information to the RAN is used below for description.

In step S201, the RAN receives the first indication information from the SMF network element. Next, the RAN may perform content shown in step S202.

S202: The RAN activates the congestion acquisition function of the RAN based on the first indication information.

The RAN activates (or triggers) the congestion acquisition function of the RAN in response to the first indication information. Optionally, when the first indication information is further for activating the notification function of the RAN, the RAN activates (or triggers) the notification function of the RAN in response to the first indication information. For descriptions of the congestion acquisition function and the notification function, refer to related content in step S201. Details are not described herein again.

S203: The RAN obtains the congestion status of the RAN.

The RAN activates the congestion acquisition function of the RAN, and may obtain the congestion status of the RAN in the data flow transmission process of the target service.

In an example, the RAN activates the congestion acquisition function of the RAN, and obtains the congestion status of the RAN in the data flow transmission process of the target service. For example, in the data flow transmission process of the target service, the RAN may obtain the congestion status of the RAN based on the data volume of the to-be-sent data flow in the RAN, based on the usage of the air interface resource in the RAN, or based on the data volume of the to-be-sent data flow in the RAN and the usage of the air interface resource.

In another example, the RAN receives the first congestion acquisition manner from the SMF network element. In this case, in the data flow transmission process of the target service, the RAN may obtain the congestion status of the RAN based on the first congestion acquisition manner. For example, when the first congestion acquisition manner indicates to obtain the congestion status of the RAN based on the data volume of the to-be-sent data flow in the RAN, the RAN may obtain the congestion status of the RAN based on the data volume of the to-be-sent data flow in the RAN. For another example, when the first congestion acquisition manner is for obtaining the congestion status of the RAN based on the usage of the air interface resource of the RAN, the RAN may obtain the congestion status of the RAN based on the usage of the air interface resource of the RAN. For still another example, when the first congestion acquisition manner is for obtaining the congestion status of the RAN based on the data volume of the to-be-sent data flow in the RAN and the usage of the air interface resource, the RAN may obtain the congestion status of the RAN based on the data volume of the to-be-sent data flow in the RAN and the usage of the air interface resource.

In step S203, the RAN obtains the congestion status of the RAN. Further, the RAN may send the congestion status of the RAN (that is, send the first congestion information) to the UE, or send the congestion status of the RAN (that is, send the first congestion information) to the UPF network element. In other words, next, the RAN may perform content shown in step S204a, or perform content shown in step S204b.

In an example, the RAN may send the first congestion information to the UE or send the first congestion information to the UPF network element based on usage of a bandwidth resource of the RAN, the usage of the air interface resource, a type of the target service, and the like. For example, when the air interface resource is sufficient, the RAN may send the first congestion information to the UE, that is, perform the content shown in step S204a. For another example, when the air interface resource is insufficient, the RAN may send the first congestion information to the UPF network element, that is, perform the content shown in step S204b.

In another example, if the RAN receives the first notification manner from the SMF network element, the RAN may send the first congestion information to the UE or send the first congestion information to the UPF network element based on the first notification manner. For example, when the first notification manner indicates to report the first congestion information by using the N3 message, the RAN may send the first congestion information to the UPF network element based on the first notification manner by using the N3 message, that is, perform the content shown in step S204b. For another example, when the first notification manner indicates to report the first congestion information by using the MAC-CE message, the RAN may send the first congestion information to the UE based on the first notification manner by using the MAC-CE message, that is, perform the content shown in step S204a. For still another example, when the first notification manner indicates to report the first congestion information by using the higher layer signaling, the RAN may send the first congestion information to the UE based on the first notification manner by using the higher layer signaling, that is, perform the content shown in step S204a.

S204a: The RAN indicates the congestion status of the RAN based on the first congestion information, and sends the first congestion information to the UE.

The RAN may send the first congestion information to the UE, where the first congestion information indicates the congestion status of the RAN. For example, the sending frequency of the first congestion information indicates the congestion status of the RAN, content included in the first congestion information indicates the congestion status of the RAN, or the sending frequency of the first congestion information and the content included in the first congestion information indicate the congestion status of the RAN. For details, refer to the descriptions of the first congestion information in step S201. Details are not described herein again.

For example, the RAN may indicate the congestion status of the RAN based on at least one of the sending frequency of the first congestion information and the content included in the first congestion information. For example, the RAN may indicate, based on a local configuration, the congestion status of the RAN based on at least one of the sending frequency of the first congestion information and the content included in the first congestion information. For another example, the RAN receives the first notification manner from the SMF network element. In this case, the RAN may indicate the congestion status of the RAN based on the first notification manner based on at least one of the sending frequency of the first congestion information and the content included in the first congestion information. For example, when the first notification manner indicates that the congestion status of the RAN is indicated based on the sending frequency of the first congestion information, the RAN may indicate the congestion status of the RAN based on the first notification manner based on the sending frequency of the first congestion information. For another example, when the first notification manner indicates that the congestion status of the RAN is indicated based on the content included in the first congestion information, the RAN may indicate the congestion status of the RAN based on the first notification manner based on the content included in the first congestion information. For still another example, when the first notification manner indicates that the congestion status of the RAN is indicated based on the sending frequency of the first congestion information and the content included in the first congestion information, the RAN may indicate the congestion status of the RAN based on the first notification manner based on the sending frequency of the first congestion information and the content included in the first congestion information.

In an example, the RAN may send the first congestion information to the UE by using the MAC-CE message or the higher layer signaling (for example, the RRC signaling, the PDCP signaling, or the SDAP signaling). For example, the RAN may send the first congestion information to the UE based on a local configuration by using the MAC-CE message or the higher layer signaling. For another example, if the RAN receives the first notification manner from the SMF network element, the RAN may send the first congestion information to the UE based on the first notification manner by using the MAC-CE message or the higher layer signaling. For example, when the first notification manner indicates to report the first congestion information by using the MAC-CE message, the RAN may send the first congestion information to the UE based on the first notification manner by using the MAC-CE message. For another example, when the first notification manner indicates to report the first congestion information by using the higher layer signaling, the RAN may send the first congestion information to the UE based on the first notification manner by using the higher layer signaling.

In another example, the RAN may determine a logical channel that carries the MAC-CE message, and send, to the UE through the determined logical channel, the MAC-CE message that carries the first congestion information. For example, the RAN may determine, based on the QFI of the target service, a correspondence between a QFI and a data radio bearer (data radio bearer, DRB) identifier, and a correspondence between a DRB identifier and a logical channel identifier (logical channel identify, LCID), the logical channel that carries the MAC-CE message.

For example, the correspondence between a QFI and a DRB identifier includes that a QFI 1 corresponds to a DRB 1, and a QFI 2 corresponds to a DRB 2; and the correspondence between a DRB identifier and an LCID includes that the DRB 1 corresponds to an LCID 2, and the DRB 2 corresponds to an LCID 1. If the QFI of the target service is the QFI 1, the RAN may determine, based on the QFI of the target service and the correspondence between a QFI and a DRB identifier, that the QFI of the target service corresponds to the DRB 1, and then may determine, based on the DRB 1 and the correspondence between a DRB identifier and an LCID, that the DRB 1 corresponds to the LCID 2, that is, determine that the logical channel carrying the MAC-CE message is the LCID 2.

It should be noted that, after step S204a, if the transmitter of the data flow of the target service is the UE, after receiving the first congestion information, the UE may adjust the sending window of the data flow of the target service based on the first congestion information, so that a transmission delay of the data flow of the target service can be reduced, and delay stability of the target service can be improved. If the transmitter of the data flow of the target service is the AF network element, after receiving the first congestion information, the UE may forward the first congestion information to the AF network element through a higher layer. After receiving the first congestion information, the AF network element may adjust the sending window of the data flow of the target service based on the first congestion information, so that a transmission delay of the data flow of the target service can be reduced, and delay stability of the target service can be improved.

S204b. The RAN indicates the congestion status of the RAN based on the first congestion information, and sends the first congestion information to the UPF network element.

The RAN may send the first congestion information to the UPF network element, and the first congestion information indicates the congestion status of the RAN. For example, the sending frequency of the first congestion information indicates the congestion status of the RAN, content included in the first congestion information indicates the congestion status of the RAN, or the sending frequency of the first congestion information and the content included in the first congestion information indicate the congestion status of the RAN. For details, refer to the descriptions of the first congestion information in step S201. Details are not described herein again. In addition, for a specific implementation in which the RAN indicates the congestion status of the RAN based on at least one of the sending frequency of the first congestion information and the content included in the first congestion information, refer to the descriptions in step S204a. Details are not described herein again.

In an example, the RAN may send the first congestion information to the UPF network element by using the N3 message. For example, the RAN may send the first congestion information to the UPF network element based on the local configuration by using the N3 message. For another example, if the RAN receives the first notification manner from the SMF network element, the RAN may send the first congestion information to the UPF network element based on the first notification manner by using the N3 message. For example, when the first notification manner indicates to report the first congestion information by using the N3 message, the RAN may send the first congestion information to the UPF network element based on the first notification manner by using the N3 message.

It should be noted that, after step S204b, if the transmitter of the data flow of the target service is the UE, after receiving the first congestion information, the UPF network element may send the first congestion information to the AF network element, and then the AF network element forwards the first congestion information to the UE through a higher layer. After receiving the first congestion information, the UE may adjust the sending window of the data flow of the target service based on the first congestion information, so that a transmission delay of the data flow of the target service can be reduced, and delay stability of the target service can be improved. If the transmitter of the data flow of the target service is the AF network element, after receiving the first congestion information, the UPF network element may send the first congestion information to the AF network element. After receiving the first congestion information, the AF network element may adjust the sending window of the data flow of the target service based on the first congestion information, so that a transmission delay of the data flow of the target service can be reduced, and delay stability of the target service can be improved.

In the foregoing embodiment, the RAN activates the congestion acquisition function of the RAN in response to the first indication information of the SMF network element, that is, obtains the congestion status of the RAN in the data flow transmission process of the target service. Further, the RAN may send, to the UE or the UPF network element, the first congestion information indicating the congestion status of the RAN. In this way, the congestion status of the RAN is reported to the transmitter of the data flow of the target service, so that the transmitter can adjust the sending window of the data flow of the target service based on the congestion status of the RAN, thereby reducing a transmission delay of the data flow of the target service and improving delay stability of the target service.

In the procedure shown in FIG. 2, the RAN obtains the congestion status of the RAN, and reports the congestion status of the RAN, to reduce a case in which the transmission delay of the data flow of the target service increases because of congestion of the RAN. When the data flow of the target service is sent from the transmitter to the receiver, congestion may be sent not only on a RAN side, but also on a UPF network element side, thereby affecting the transmission delay of the data flow of the target service. The following describes, from a perspective of the UPF network element, a specific implementation in which the UPF network element obtains a congestion status of the UPF network element and reports the congestion status of the UPF network element.

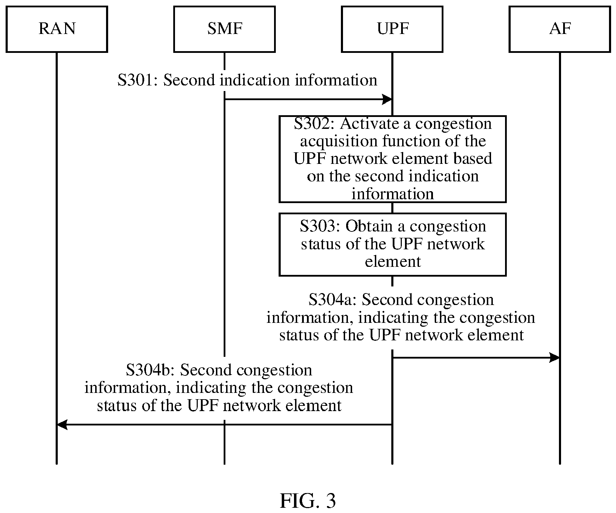

FIG. 3 is another schematic flowchart of a communication method according to an embodiment of this application. In this embodiment, a UPF network element obtains a congestion status of the UPF network element, and sends second congestion information to an AF network element or a RAN.

S301: An SMF network element sends second indication information to the UPF network element. Correspondingly, the UPF network element receives the second indication information.

The second indication information may indicate to activate (or trigger) a congestion acquisition function of the UPF network element. The congestion acquisition function is for obtaining the congestion status of the UPF network element in a data flow transmission process of a target service. Optionally, the second indication information may further indicate to activate a notification function of the UPF network element, and the notification capability is for sending the congestion status of the UPF network element. It should be understood that indication of activating the congestion acquisition function of the UPF network element and indication of activating the notification function of the UPF network element may be same indication information, or may be different indication information. This is not limited in this embodiment of this application. In addition, the target service may be a delay-sensitive service, or may be a delay-insensitive service. This is not limited in this embodiment of this application. A data flow of the target service may come from UE, that is, a transmitter of the data flow of the target service is the UE, or come from the AF network element, that is, a transmitter of the data flow of the target service is the AF network element.

For example, the SMF network element may send the second indication information to the UPF network element by using an N4 message. The N4 message may be, for example, an N4 session establishment request (N4 session establishment request) message or an N4 session modification request (N4 session modification request) message. However, this is not limited in this embodiment of this application. Optionally, the N4 message may further include a QFI of the target service. For example, the SMF network element may determine, based on a local configuration (for example, a requirement of the target service), to activate the congestion acquisition function of the UPF network element for the target service, or determine to activate the congestion acquisition function and the notification function of the UPF network element for the target service. For another example, based on an authorized quality of service monitoring policy of the target service from a PCF network element, the SMF may determine to activate the congestion acquisition function of the UPF network element for the target service, or determine to activate the congestion acquisition function and the notification function of the UPF network element for the target service. Further, the SMF network element includes the second indication information in the N4 message, and sends the second indication information to the UPF network element. Correspondingly, the UPF network element receives the N4 message, to obtain the second indication information.

The second indication information may be represented by using an IE or a field newly added to the N4 message, or may be represented by using a reserved IE or field in the N4 message (that is, represented by using a reserved bit in the N4 message). This is not limited in this embodiment of this application.

It should be noted that, when the second indication information is indication information indicating to activate the congestion acquisition function of the UPF network element, the congestion acquisition function may be understood as: obtaining the congestion status of the UPF network element in the data flow transmission process of the target service, and reporting the obtained congestion status.

In a possible implementation, the SMF network element may send a second congestion acquisition manner (which may be referred to as an action for the UPF network element, for example, denoted as an action for UPF), a second notification manner (which may be referred to as a UPF network element reporting event, for example, denoted as report events), or the second congestion acquisition manner and the second notification manner to the UPF network element. Correspondingly, the UPF network element receives the second congestion acquisition manner, receives the second notification manner, or receives the second congestion acquisition manner and the second notification manner. The second congestion acquisition manner is for determining a manner of obtaining the congestion status of the UPF network element. The second notification manner is for determining one or more of a condition for reporting the congestion status of the UPF network element, a manner of reporting the congestion status of the UPF network element, and reported content. It should be understood that the second congestion acquisition manner and the second indication information may be carried in a same message, or may be carried in different messages. Similarly, the second notification manner and the second indication information may be carried in a same message, or may be carried in different messages. This is not limited in this embodiment of this application.

In an example, the second congestion acquisition manner may indicate to obtain the congestion status of the UPF network element based on a data volume of a to-be-sent data flow in the UPF network element. For specific descriptions of the data volume of the to-be-sent data flow, refer to related content in step S201. Details are not described herein again. The congestion status of the UPF network element may be a current congestion status of the UPF network element, may be a congestion status of the UPF network element within future specified duration, or may be a congestion status of the UPF network element within current and future specified duration. For example, the second congestion acquisition manner may indicate to obtain the current congestion status of the UPF network element based on the length or the data proportion of the to-be-sent data flow in the queue (or the buffer). For another example, the second congestion acquisition manner may indicate to obtain the congestion status of the UPF network element within the future specified duration based on the increase of the length or the data proportion of the to-be-sent data flow in the queue (or the buffer). For still another example, the second congestion acquisition manner may indicate to obtain the congestion status of the UPF network element within the current and future specified duration based on the length or the data proportion of the to-be-sent data flow in the queue (or the buffer) and the increase of the length or the data proportion of the to-be-sent data flow in the queue (or the buffer). In addition, the queue may be a queue at an IP layer, a general packet radio service tunneling protocol user plane (general packet radio service tunneling protocol user plane, GTPU) layer, or the like of the UPF network element.

In the foregoing example, the UPF network element may determine, based on the second congestion acquisition manner, the manner of obtaining the congestion status of the UPF network element. In other words, the UPF network element may determine, based on the second congestion acquisition manner, to obtain the congestion status of the UPF network element based on the data volume of the to-be-sent data flow in the UPF network element.

In an example, the second notification manner may indicate one or more of the following:
1. Second threshold

The second threshold may be understood as a trigger condition for the UPF network element to report the congestion status of the UPF network element. For example, when the data volume of the to-be-sent data flow in the UPF network element is greater than or equal to the second threshold, the UPF network element sends the congestion status of the UPF network element. The second threshold may be a length threshold corresponding to a queue, a length threshold corresponding to a buffer, a data proportion threshold corresponding to the queue, a data proportion threshold corresponding to the buffer, an increase threshold of the length or the data proportion corresponding to the queue, an increase threshold of the length or the data proportion corresponding to the buffer, or the like. This is not limited in this embodiment of this application. In addition, the second threshold may be the same as or different from the first threshold.

### 2. Sending the congestion status of the UPF network element

That the second notification manner indicates to send the congestion status of the UPF network element may be understood as that the UPF network element may send the congestion status of the UPF network element after obtaining the congestion status of the UPF network element. Further, the second notification manner may further indicate to send the congestion status of the UPF network element to the RAN or the AF network element.

### 3. Indicating the congestion status of the UPF network element based on the second congestion information

That the second notification manner indicates the congestion status of the UPF network element based on the second congestion information may be understood as indicating content reported by the UPF network element. For example, the second notification manner indicates the congestion status of the UPF network element based on a sending frequency of the second congestion information, indicates the congestion status of the UPF network element by using content included in the second congestion information, or indicates the congestion status of the UPF network element based on the sending frequency of the second congestion information and the content included in the second congestion information.

For example, the sending frequency of the second congestion information may indicate the congestion status of the UPF network element. The second congestion information may be, for example, a fixed IE or field, one or more bits, or one or more bytes. This is not limited in this embodiment of this application. In this case, the transmitter or a receiver of the data flow of the target service may determine the congestion status of the UPF network element by collecting statistics on an amount of second congestion information received in a unit time. In addition, for the sending frequency of the second congestion information, refer to related descriptions in Table 1. Details are not described herein again.

Optionally, the amount of second congestion information received in the unit time may correspond to a preset congestion level. For example, a larger amount of second congestion information received in the unit time indicates a higher congestion level corresponding to the amount of second congestion information.

For example, the content included in the second congestion information may indicate the congestion status of the UPF network element. For example, the second congestion information may include but is not limited to one or more of the following information:
(1) Congestion level of the UPF network element

The congestion level of the UPF network element may be a current congestion level, a congestion level within predicted future specified duration, or a congestion level within current and future specified duration. The congestion level may be predefined, preconfigured, or the like. This is not limited in this embodiment of this application. In addition, a higher congestion level indicates severer congestion.

### (2) Data volume of the to-be-sent data flow in the UPF network element

The data volume of the to-be-sent data flow may be one or more of the following: the length of the to-be-sent data flow in the queue, the length of the to-be-sent data flow in the buffer, the data proportion of the to-be-sent data flow in the queue, the data proportion of the to-be-sent data flow in the buffer, the increase of the length or the data proportion of the to-be-sent data flow in the queue, the increase of the length or the data proportion of the to-be-sent data flow in the buffer, and the like.

### 4. Message that carries the second congestion information

That the second notification manner indicates the message that carries the second congestion information may be understood as a manner of indicating the UPF network element to report the second congestion information. In this embodiment, the message that carries the second congestion information may be, for example, an N3 message, a reply message of the data flow of the target service, an uplink packet that carries data of the target service, or a first message. This is not limited in this embodiment of this application. The N3 message may be, for example, a GTPU message. This is not limited in this embodiment of this application. The reply message may be an acknowledgment (acknowledgment, ACK) message or a negative acknowledgment (negative acknowledgment, NACK) message. This is not limited in this embodiment of this application. The first message is a message constructed in addition to the reply message and the uplink packet. The first message may be, for example, a data plane notification packet or a control plane notification message. This is not limited in this embodiment of this application.

In the foregoing example, the UPF network element may determine a reporting condition of the second congestion information, a reporting manner of the second congestion information, reported content, and the like based on the second notification manner. To be specific, the UPF network element may determine at least one of the following based on the second notification manner: to send the congestion status of the UPF network element to the AF network element or the RAN when the data volume of the to-be-sent data flow is greater than or equal to the second threshold, to indicate the congestion status of the UPF network element based on the second congestion information, or the message that carries the second congestion information.

In the foregoing descriptions, the second indication information may be represented by using the newly added IE or field in the N4 message, or may be represented by using the reserved IE or field in the N4 message. In other words, the SMF network element explicitly indicates the UPF network element to activate the congestion acquisition function of the UPF network element. In another possible implementation, the SMF network element may implicitly indicate the UPF network element to activate the congestion acquisition function of the UPF network element. For example, the SMF network element may indicate, in the second congestion acquisition manner, the second notification manner, or the second congestion acquisition manner and the second notification manner, the UPF network element to activate the congestion acquisition function of the UPF network element. For example, the SMF network element sends the second congestion acquisition manner to the UPF network element. After receiving the second congestion acquisition manner, the UPF network element activates the congestion acquisition function of the UPF network element, obtains the congestion status of the UPF network element based on the second congestion acquisition manner in the data flow transmission process of the target service, and reports the congestion status of the UPF network element. For another example, the SMF network element sends the second notification manner to the UPF network element. After receiving the second notification manner, the UPF network element activates the congestion acquisition function of the UPF network element, obtains the congestion status of the UPF network element in the data flow transmission process of the target service, and reports the congestion status of the UPF network element based on the second notification manner. For still another example, the SMF network element sends the second congestion acquisition manner and the second notification manner to the UPF network element. After receiving the second congestion acquisition manner and the second notification manner, the UPF network element activates the congestion acquisition function of the UPF network element, obtains the congestion status of the UPF network element based on the second congestion acquisition manner in the data flow transmission process of the target service, and reports the congestion status of the UPF network element based on the second notification manner. For ease of understanding, an example in which the SMF network element sends the second indication information to the UPF network element is used below for description.

In step S301, the UPF network element receives the second indication information from the SMF network element. Next, the UPF network element may perform content shown in step S302.

S302: The UPF network element activates the congestion acquisition function of the UPF network element based on the second indication information.

The UPF network element activates (or triggers) the congestion acquisition function of the UPF network element in response to the second indication information. Optionally, when the second indication information is further for activating the notification function of the UPF network element, the UPF network element activates (or triggers) the notification function of the UPF network element in response to the second indication information. For descriptions of the congestion acquisition function and the notification function, refer to related content in step S301. Details are not described herein again.

S303: The UPF network element obtains the congestion status of the UPF network element.

The UPF network element activates the congestion acquisition function of the UPF network element, and may obtain the congestion status of the UPF network element in the data flow transmission process of the target service.

In an example, the UPF network element activates the congestion acquisition function of the UPF network element, and obtains the congestion status of the UPF network element in the data flow transmission process of the target service. For example, in the data flow transmission process of the target service, the UPF network element may obtain the congestion status of the UPF network element based on the data volume of the to-be-sent data flow in the UPF network element.

In another example, the UPF network element receives the second congestion acquisition manner from the SMF network element. In this case, in the data flow transmission process of the target service, the UPF network element may obtain the congestion status of the UPF network element based on the second congestion acquisition manner. For example, when the second congestion acquisition manner indicates to obtain the congestion status of the UPF network element based on the data volume of the to-be-sent data flow in the UPF network element, the UPF network element may obtain the congestion status of the UPF network element based on the data volume of the to-be-sent data flow in the UPF network element.

In step S303, the UPF network element obtains the congestion status of the UPF network element. Further, the UPF network element may send the congestion status of the UPF network element (that is, send the second congestion information) to the AF network element, or send the congestion status of the UPF network element (that is, send the second congestion information) to the RAN. In other words, next, the UPF network element may perform content shown in step S304a, or perform content shown in step S304b.

In an example, the UPF network element may send the second congestion information to the AF network element or send the second congestion information to the RAN based on usage of a bandwidth resource of the UPF network element, a type of the target service, and the like. For example, if the target service is an ultra-high definition video service, and the transmitter of the data flow of the target service is the AF network element, the UPF network element may send the second congestion information to the RAN, that is, perform the content shown in step S304b.

In another example, if the UPF network element receives the second notification manner from the SMF network element, the UPF network element may send the second congestion information to the AF network element or send the second congestion information to the RAN based on the second notification manner. For example, when the second notification manner indicates to report the second congestion information by using the N3 message, the UPF network element may send the second congestion information to the RAN based on the second notification manner by using the N3 message, that is, perform the content shown in step S304b. For another example, when the second notification manner indicates to report the second congestion information by using the reply message of the data flow of the target service, the UPF network element may send the second congestion information to the AF network element based on the second notification manner by using the reply message, that is, perform the content shown in step S304a. For another example, when the second notification manner indicates to report the second congestion information by using the uplink packet that carries the data of the target service, the UPF network element may send the second congestion information to the AF network element based on the second notification manner by using the uplink packet, that is, perform the content shown in step S304a. For still another example, when the second notification manner indicates to report the second congestion information by using the first message, the UPF network element may construct the first message based on the second notification manner, and send the second congestion information to the AF network element by using the first message, that is, perform the content shown in step S304a.

S304a: The UPF network element indicates the congestion status of the UPF network element based on the second congestion information, and sends the second congestion information to the AF network element.

The UPF network element may send the second congestion information to the AF network element, and the second congestion information indicates the congestion status of the UPF network element. For example, the sending frequency of the second congestion information may indicate the congestion status of the UPF network element, the content included in the second congestion information may indicate the congestion status of the UPF network element, or the sending frequency of the second congestion information and the content included in the second congestion information may indicate the congestion status of the UPF network element. For details, refer to the descriptions of the second congestion information in step S301. Details are not described herein again.

For example, the UPF network element may indicate the congestion status of the UPF network element based on at least one of the sending frequency of the second congestion information and the content included in the second congestion information. For example, the UPF network element may indicate the congestion status of the UPF network element based on a local configuration based on at least one of the sending frequency of the second congestion information and the content included in the second congestion information. For another example, the UPF network element receives the second notification manner from the SMF network element. In this case, the UPF network element may indicate the congestion status of the UPF network element based on the second notification manner based on at least one of the sending frequency of the second congestion information and the content included in the second congestion information. For example, when the second notification manner indicates that the congestion status of the UPF network element is indicated based on the sending frequency of the second congestion information, the UPF network element may indicate the congestion status of the UPF network element based on the second notification manner based on the sending frequency of the second congestion information. For another example, when the second notification manner indicates that the congestion status of the UPF network element is indicated based on the content included in the second congestion information, the UPF network element may indicate the congestion status of the UPF network element based on the second notification manner based on the content included in the second congestion information. For still another example, when the second notification manner indicates that the congestion status of the UPF network element is indicated based on the sending frequency of the second congestion information and the content included in the second congestion information, the UPF network element may indicate the congestion status of the UPF network element based on the second notification manner based on the sending frequency of the second congestion information and the content included in the second congestion information.

In a possible implementation, the UPF network element may send the second congestion information to the AF network element by using the reply message of the data flow of the target service, the uplink packet that carries the data of the target service, the first message, or the like. For example, the UPF network element may send the second congestion information to the AF network element based on the local configuration by using the reply message of the data flow of the target service, the uplink packet that carries the data of the target service, the first message, or the like. For another example, the UPF network element receives the second notification manner from the SMF network element. In this case, the UPF network element may send the second congestion information to the AF network element based on the second notification manner by using the reply message of the data flow of the target service, the uplink packet that carries the data of the target service, the first message, or the like.

For example, when the second notification manner indicates to report the second congestion information by using the reply message of the data flow of the target service, the UPF network element may send the second congestion information to the AF network element based on the second notification manner by using the reply message. For another example, when the second notification manner indicates to report the second congestion information by using the uplink packet that carries the data of the target service, the UPF network element may send the second congestion information to the AF network element based on the second notification manner by using the uplink packet. For still another example, when the second notification manner indicates to report the second congestion information by using the first message, the UPF network element may construct the first message based on the second notification manner, and send the second congestion information to the AF network element by using the first message.

In an example, the UPF network element may send the second congestion information to the AF network element by using the reply message of the data flow of the target service. For example, the UPF network element receives the reply message of the data flow of the target service from the UE, includes the second congestion information in the reply message, and sends, to the AF network element, the reply message that carries the second congestion information. For example, the UPF network element may determine, based on one or more of a protocol of the reply message, a quantity of reply messages, the second notification manner, and the like, a manner of reporting the second congestion information. For example, the reply message is a reply message of an IPv4-based transmission control protocol (transmission control protocol, TCP). In this case, the UPF network element may indicate the congestion status (for example, a congestion level) of the UPF network element by using a special bit, for example, an explicit congestion notification (explicit congestion notification, ECN), in the reply message. For another example, if the quantity of reply messages is sufficient, the UPF network element may indicate the congestion status of the UFP network element based on a sending frequency of the reply messages. For still another example, a packet header of the reply message is an extensible protocol. In this case, the UPF network element may indicate the congestion status (for example, the data volume of the to-be-sent data in the UPF network element or a congestion level) of the UPF network element by using a reserved bit in the reply message or adding a new bit to the reply message.

In the foregoing example, the UPF network element includes the second congestion information in the reply message in the data flow transmission process of the target service. In this way, there is no need to construct a new packet to carry the second congestion information, thereby reducing consumption of network resources and improving network resource utilization.

In an example, the UPF network element may send the second congestion information to the AF network element by using the uplink packet of the data of the target service. For example, the UPF network element receives the uplink packet that is from the UE and that is for the data of the target service, includes the second congestion information in the uplink packet, and sends, to the AF network element, the uplink packet that carries the second congestion information. For example, the UPF network element may add the second congestion information, for example, the data volume of the to-be-sent data in the UPF network element or the congestion level, to the uplink packet for the data of the target service.

In the foregoing example, the UPF network element includes the second congestion information by using the uplink packet that carries the data of the target service. In this way, there is no need to construct a new packet to carry the second congestion information, thereby reducing consumption of network resources and improving network resource utilization.

In another example, the UPF network element may send the second congestion information to the AF network element through an NEF network element. The NEF network element and the UPF network element may have a co-location relationship. However, this is not limited in this embodiment of this application. For example, the UPF network element may construct (or generate) the first message that carries the second congestion information, and send the first message to the AF network element through the NEF network element. For example, the UPF network element may construct the first message based on quintuple information of the data flow of the target service and an address of the UPF network element. For example, when the data flow of the target service is a downlink data flow, a source address of the first message is the address of the UPF network element, and a destination address of the first message is a source address of the data flow of the target service. For another example, when the data flow of the target service is an uplink data flow, the source address of the first message is the address of the UPF network element, and a destination address of the first message is a source address of the data flow of the target service. Optionally, the second congestion information may include identification information of the UE, identification information of the target service (for example, a QFI of the target service), and the like.

The UPF network element may send the second congestion information to the AF network element through the NEF network element. In another possible implementation, the UPF network element may alternatively send the second congestion information to the AF network element through a proxy. For example, the UPF network element may construct (or generate) the first message that carries the second congestion information, and send the first message to the AF network element. For example, the UPF network element may construct the first message based on quintuple information of the data flow of the target service, or based on quintuple information of the data flow of the target service and an AF network element address configured by the AF network element. For example, when the data flow of the target service is a downlink data flow and the UE is unaware of the UPF network element (that is, the UPF network element is a transparent proxy), a source address of the first message is a destination address of the data flow of the target service, and a destination address of the first message is a source address of the data flow of the target service. For example, when the data flow of the target service is a downlink data flow and the UE is aware of the UPF network element (that is, the UPF network element is a non-transparent proxy), a source address of the first message is a destination address of the data flow of the target service, and a destination address of the first message is an AF network element address configured by the AF network element. For another example, when the data flow of the target service is an uplink data flow and the UE is unaware of the UPF network element, a source address of the first message is a source address of the data flow of the target service, and a destination address of the first message is a destination address of the data flow of the target service. For still another example, when the data flow of the target service is an uplink data flow and the UE is aware of the UPF network element, a source address of the first message is a source address of the data flow of the target service, and a destination address of the first message is an AF network element address configured by the AF network element.

In the foregoing example, the UPF network element may construct the first message that carries the second congestion information, and send the first message to the AF through the NEF network element or through the proxy. An implementation is flexible. The congestion status of the UPF network element can be fed back in a timely manner. Real-time performance is high.

The AF network element configured by the AF network element may be understood as a destination address of the first message preconfigured by the AF network element. For example, the AF network element may preconfigure the destination address of the first message. When congestion occurs on a network side, the UPF network element may construct the first message by using the destination address, so that the first message can be sent to the AF network element.

It should be noted that, after step S304a, if the transmitter of the data flow of the target service is the AF network element, after receiving the second congestion information, the AF network element may adjust the sending window of the data flow of the target service based on the second congestion information, so that a transmission delay of the data flow of the target service can be reduced, and delay stability of the target service can be improved. If the transmitter of the data flow of the target service is the UE, after receiving the second congestion information, the AF network element may forward the second congestion information to the UE through a higher layer. After receiving the second congestion information, the UE may adjust the sending window of the data flow of the target service based on the second congestion information, so that a transmission delay of the data flow of the target service can be reduced, and delay stability of the target service can be improved.

S304b: The UPF network element indicates the congestion status of the UPF network element based on the second congestion information, and sends the second congestion information to the RAN.

The UPF network element may send the second congestion information to the RAN, and the second congestion information indicates the congestion status of the UPF network element. For example, the sending frequency of the second congestion information indicates the congestion status of the UPF network element, the content included in the second congestion information indicates the congestion status of the UPF network element, or the sending frequency of the second congestion information and the content included in the second congestion information indicate the congestion status of the UPF network element. For details, refer to the descriptions of the second congestion information in step S301. Details are not described herein again. In addition, for a specific implementation in which the UPF network element indicates the congestion status of the UPF network element based on at least one of the sending frequency of the second congestion information and the content included in the second congestion information, refer to the descriptions in step S304a. Details are not described herein again.

In an example, the UPF network element may send the second congestion information to the RAN by using the N3 message. For example, the UPF network element may send the second congestion information to the RAN based on the local configuration by using the N3 message. For another example, if the UPF network element receives the second notification manner from the SMF network element, the UPF network element may send the second congestion information to the RAN network element based on the second notification manner by using the N3 message. For example, when the second notification manner indicates to report the second congestion information by using the N3 message, the UPF network element may send the second congestion information to the RAN network element based on the second notification manner by using the N3 message.

It should be noted that, after step S304b, if the transmitter of the data flow of the target service is the UE, after receiving the second congestion information, the RAN may send the second congestion information to the UE. After receiving the second congestion information, the UE may adjust the sending window of the data flow of the target service based on the second congestion information, so that a transmission delay of the data flow of the target service can be reduced, and delay stability of the target service can be improved. If the transmitter of the data flow of the target service is the AF network element, after receiving the second congestion information, the RAN may send the second congestion information to the UE, and then the UE forwards the second congestion information to the AF network element through a higher layer. After receiving the second congestion information, the AF network element may adjust the sending window of the data flow of the target service based on the second congestion information, so that a transmission delay of the data flow of the target service can be reduced, and delay stability of the target service can be improved.

In the foregoing embodiment, the UPF network element activates the congestion acquisition function of the UPF network element in response to the second indication information of the SMF network element, that is, obtains the congestion status of the UPF network element in the data flow transmission process of the target service. Further, the UPF network element may send, to the AF network element or the RAN, the second congestion information indicating the congestion status of the UPF network element. In this way, the congestion status of the UPF network element is reported to the transmitter of the data flow of the target service, so that the transmitter can adjust the sending window of the data flow of the target service based on the congestion status of the UPF network element, thereby reducing a transmission delay of the data flow of the target service and improving delay stability of the target service.

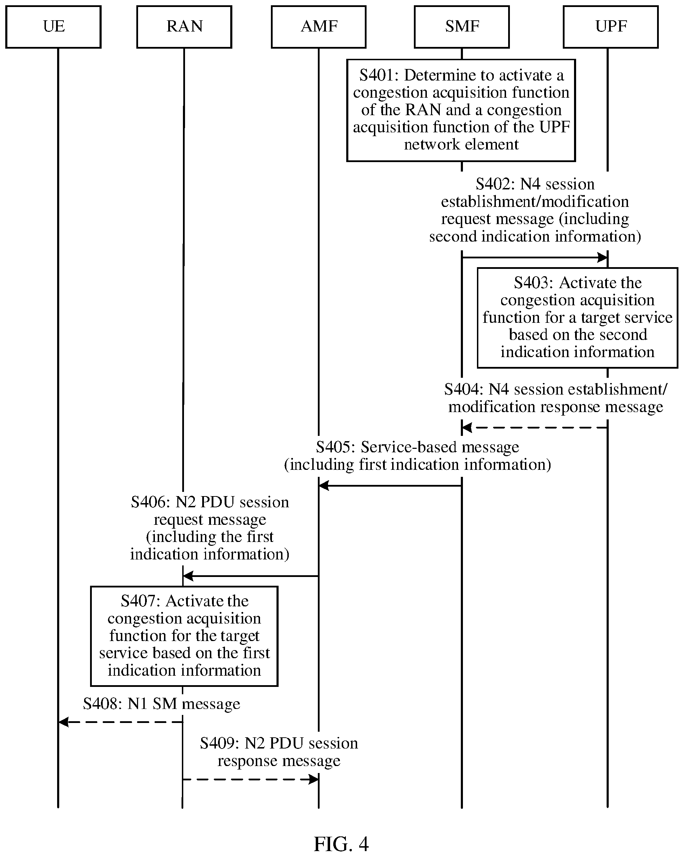

In step S201 and step S301, the SMF network element sends the first indication information to the RAN, and sends the second indication information to the UPF network element. With reference to FIG. 4, the following describes a specific implementation process in which the SMF network element sends the first indication information to the RAN and sends the second indication information to the UPF network element.

FIG. 4 is a schematic flowchart of a communication method according to this application. The method may be applied to a protocol data unit (protocol data unit, PDU) session establishment procedure of a target service, a PDU session modification procedure of the target service, or another communication procedure. This is not limited in this embodiment of this application. In this embodiment, an SMF network element sends first indication information to a RAN, and sends second indication information to a UPF network element. In addition, in FIG. 4, a dashed line is for representing an optional step (that is, the step that may be performed or may not be performed).

S401: The SMF network element determines to activate a congestion acquisition function of the RAN and a congestion acquisition function of the UPF network element.

For example, the SMF network element may determine, based on at least one of a local configuration (for example, a requirement of the target service) and an authorized quality of service monitoring policy of the target service from a PCF network element, to activate the congestion acquisition function of the RAN, to activate the congestion acquisition function of the UPF network element, or to activate the congestion acquisition function of the RAN and the congestion acquisition function of the UPF network element. The congestion acquisition function of the RAN is for obtaining the congestion status of the RAN in a data flow transmission process of the target service. The congestion acquisition function of the UPF network element is for obtaining a congestion status of the UPF network element in the data flow transmission process of the target service. For ease of understanding, in this embodiment of this application, an example in which it is determined to activate the congestion acquisition function of the RAN and the congestion acquisition function of the UPF network element is used for description.

For example, the SMF network element may further determine, based on at least one of the local configuration and the authorized quality of service monitoring policy of the target service from the PCF network element, to activate a notification function of the RAN, to activate a notification function of the UPF network element, or to activate the notification function of the RAN and the notification function of the UPF network element. The notification function of the RAN is for sending the congestion status of the RAN. The notification function of the UPF network element is for sending the congestion status of the UPF network element.

S402: The SMF network element sends an N4 session establishment/modification request message to the UPF network element. Correspondingly, the UPF network element receives the N4 session establishment/modification request message.

The SMF network element may send the second indication information to the UPF network element. The second indication information is for activating the congestion acquisition function of the UPF network element. Optionally, the second indication information may be further for activating the notification function of the UPF network element. For example, the SMF network element may send the second indication information to the UPF network element by using the N4 session establishment/modification request message, where the N4 session establishment/modification request message includes the second indication information. Certainly, the SMF network element may alternatively send the second indication information to the UPF network element by using another message other than the N4 session establishment/modification request message. This is not limited in this embodiment of this application. For ease of understanding, the N4 session establishment/modification request message is used as an example for description in this embodiment. In addition, the N4 session establishment/modification request message may include a QFI of the target service.

In a possible implementation, the N4 session establishment/modification request message may further include a second congestion acquisition manner, a second notification manner, or the second congestion acquisition manner and the second notification manner. The second congestion acquisition manner is for determining a manner of obtaining the congestion status of the UPF network element. The second notification manner is for determining one or more of a condition for reporting the congestion status of the UPF network element, a manner of reporting the congestion status of the UPF network element, and reported content. For specific implementations of the second congestion acquisition manner and the second notification manner, refer to related descriptions in step S301. Details are not described herein again.

S403: The UPF network element activates a congestion acquisition function for the target service based on the second indication information.

The UPF network element receives the N4 session establishment/modification request message, and obtains the second indication information. The UPF network element may activate the congestion acquisition function for the target service based on the second indication information. Optionally, when the second indication information may further indicate to activate the notification function of the UPF network element, the UPF network element may further activate the notification function of the UPF network element based on the second indication information. Further, after activating the congestion acquisition function for the target service, the UPF network element may monitor a data flow of the target service, to obtain the congestion status of the UPF network element in the data flow transmission process of the target service.

S404: The UPF network element sends an N4 session establishment/modification response message to the SMF network element. Correspondingly, the SMF network element receives the N4 session establishment/modification response message.

Step S404 is an optional step. In other words, the UPF network element may send the N4 session establishment/modification response message to the SMF network element, or may not send the N4 session establishment/modification response message to the SMF network element. For example, after receiving the N4 session establishment request message, the UPF network element may send the N4 session establishment response message to the SMF network element in response to the N4 session establishment request message.

S405: The SMF network element sends a service-based message to an AMF network element, and the AMF network element receives the service-based message.

The SMF network element may send the first indication information to the AMF network element. The first indication information is for activating the congestion acquisition function of the RAN network element. Optionally, the first indication information may be further for activating the notification function of the RAN network element. For example, the SMF network element may send the first indication information to the AMF network element by using the service-based message. The service-based message includes an N1 SM message and an N2 SM message, and the N2 SM message includes the first indication information. Certainly, the SMF network element may alternatively send the first indication information to the AMF network element by using another message other than the service-based message. This is not limited in this embodiment of this application. For ease of understanding, the service-based message is used as an example for description in this embodiment. In addition, the N2 SM message may include the QFI of the target service.

In a possible implementation, the N2 SM message may further include a first congestion acquisition manner, a first notification manner, or the first congestion acquisition manner and the first notification manner. The first congestion acquisition manner is for determining a manner of obtaining the congestion status of the RAN. The first notification manner is for determining one or more of a condition for reporting the congestion status of the RAN, a manner of reporting the congestion status of the RAN, and reported content. For specific implementations of the first congestion acquisition manner and the first notification manner, refer to related descriptions in step S201. Details are not described herein again.

S406: The AMF network element sends an N2 PDU session request message to the RAN. Correspondingly, the RAN receives the N2 PDU session request message.

The AMF network element sends the first indication information to the RAN. For example, the AMF network element may send the first indication information to the RAN by using the N2 PDU session request message. For example, the AMF network element receives the service based message, obtains the N1 SM message and the N2 SM message, and sends the N2 PDU session request message to the RAN. The N2 PDU session request message includes the N1 SM message and the N2 SM message, and the N2 SM message includes the first indication information.

S407: The RAN activates the congestion acquisition function for the target service based on the first indication information.

The RAN receives the N2 PDU session request message, and obtains the first indication information. The RAN may activate the congestion acquisition function for the target service based on the first indication information. Optionally, when the first indication information further indicates to activate the notification function of the RAN, the RAN may further activate the notification function of the RAN based on the first indication information. Further, after activating the congestion acquisition function for the target service, the RAN may monitor the data flow of the target service, to obtain the congestion status of the RAN network element in the data flow transmission process of the target service.

In this case, the UPF network element activates the congestion acquisition function for the target service, and the RAN activates the congestion acquisition function for the target service. Next, the RAN may further perform content shown in steps S408 and S409. That is, steps S408 and S409 are optional steps.

S408: The RAN sends the N1 SM message to UE. Correspondingly, the UE receives the N1 SM message.

The RAN receives the N2 PDU session request message, obtains the N1 SM message, and sends the N1 SM message to the UE.

S409: The RAN sends an N2 PDU session response message to the AMF network element. Correspondingly, the AMF network element receives the N2 PDU session response message.

After receiving the N2 PDU session request message, the RAN may send the N2 PDU session response message to the AMF network element in response to the N2 PDU session request message.

In step S408 and step S409, an air interface transmission channel is established between the UE and the RAN, an N3 uplink tunnel is established between the RAN and the UPF network element, and the UE may send an uplink data packet through the RAN and the UPF network element.

In the foregoing embodiment, the SMF network element may send the first indication information to the RAN and send the second indication information to the UPF network element based on the requirement of the target service, the quality of service monitoring policy of the target service, or the like. After receiving the first indication information, the RAN activates the congestion acquisition function for the target service, to obtain the congestion status of the RAN in the data flow transmission process of the target service. After receiving the second indication information, the UPF network element activates the congestion acquisition function for the target service, to obtain the congestion status of the UPF network element in the data flow transmission process of the target service.

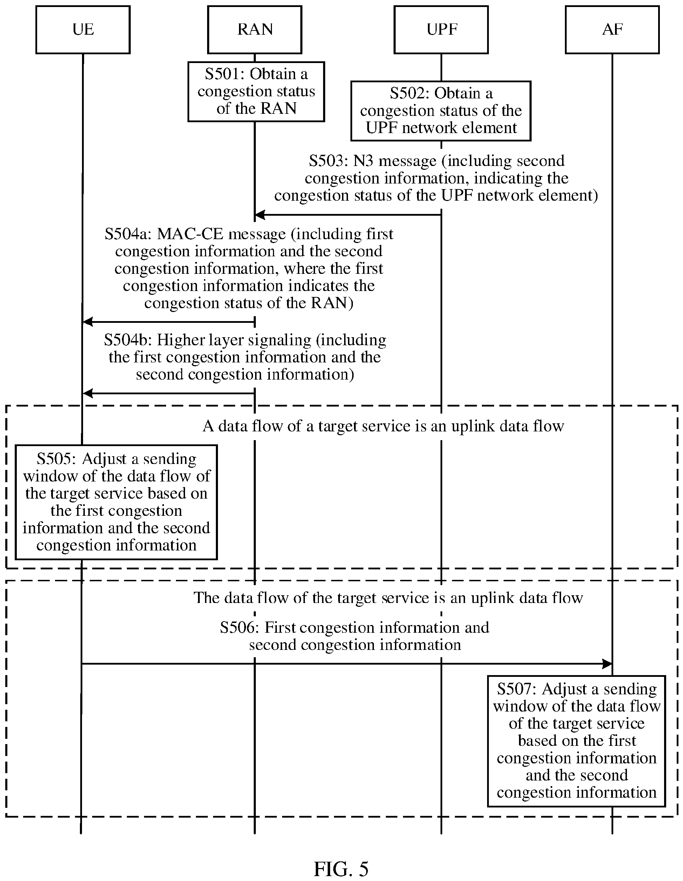

As described in FIG. 4, the RAN activates the congestion acquisition function for the target service, and the UPF network element activates the congestion acquisition function for the target service. With reference to FIG. 5, FIG. 6, FIG. 7, and FIG. 8, the following describes specific implementations in which the RAN reports the congestion status of the RAN and the UPF network element reports the congestion status of the UPF network element.

FIG. 5 is another schematic flowchart of a communication method according to this application. In this embodiment, a UPF network element sends second congestion information to a RAN, and the RAN sends the second congestion information to a transmitter of a data flow of a target service. The transmitter of the data flow of the target service may be UE or an AF network element.

S501: The RAN obtains a congestion status of the RAN.

The RAN activates a congestion acquisition function for the target service. In the data flow transmission process of the target service, the RAN obtains the congestion status of the RAN. Specifically, the RAN may obtain the congestion status of the RAN based on a local configuration or a first congestion acquisition manner. For example, the RAN may obtain the congestion status of the RAN based on a data volume of a to-be-sent data flow in the RAN, based on usage of an air interface resource in the RAN, or based on the data volume of the to-be-sent data flow in the RAN and the usage of the air interface resource. For a specific implementation of step S501, refer to related descriptions in step S203. Details are not described herein again.

S502: The UPF network element obtains a congestion status of the UPF network element.

The UPF network element activates a congestion acquisition function for the target service. The UPF network element obtains the congestion status of the UPF network element in the data flow transmission process of the target service. Specifically, the UPF network element may obtain the congestion status of the UPF network element based on a local configuration or a second congestion acquisition manner. For example, the UPF network element may obtain the congestion status of the UPF network element based on a data volume of a to-be-sent data flow in the UPF network element. For a specific implementation of step S502, refer to related descriptions in step S303. Details are not described herein again.

S503: The UPF network element sends an N3 message to the RAN. Correspondingly, the RAN receives the N3 message.

The UPF network element indicates the congestion status of the UPF network element based on the second congestion information, and sends the second congestion information to the RAN. Correspondingly, the RAN receives the second congestion information. For example, the UPF network element sends the second congestion information to the RAN by using the N3 message, and the N3 message includes the second congestion information. It may be understood that the UPF network element may alternatively send the second congestion information to the RAN by using a message other than the N3 message. This is not limited in this embodiment of this application. For example, the UPF network element may send the N3 message to the RAN based on the local configuration or a second notification manner. For example, when a data flow of the to-be-sent data in the UPF network element is greater than or equal to a second threshold, the UPF network element sends the N3 message to the RAN. For another example, when the second notification manner indicates to report the second congestion information by using the N3 message, the UPF network element sends the N3 message to the RAN. For a specific implementation of step S503, refer to related descriptions in step S304b. Details are not described herein again.

The second congestion information indicates congestion information of the UPF network element. For example, the sending frequency of the second congestion information indicates the congestion status of the UPF network element, the content included in the second congestion information indicates the congestion status of the UPF network element, or the sending frequency of the second congestion information and the content included in the second congestion information indicate the congestion status of the UPF network element. For details, refer to the descriptions of the second congestion information in step S301. Details are not described herein again. In addition, for a specific implementation in which the UPF network element indicates the congestion status of the UPF network element based on at least one of the sending frequency of the second congestion information and the content included in the second congestion information, refer to the descriptions in step S304a. Details are not described herein again. Correspondingly, the RAN may obtain the congestion status of the UPF network element based on the sending frequency of the second congestion information and the content included in the second congestion information. It should be understood that the RAN may not obtain the congestion status of the UPF network element.

The RAN receives the second congestion information. Next, the RAN may send the second congestion information to the UE by using step S504a or step S504b. For example, the RAN may send the second congestion information to the UE based on the local configuration or a first notification manner by using a MAC-CE message, that is, perform content shown in step S504a; or send the second congestion information to the UE by using higher layer signaling, that is, perform content shown in step S504b. For a specific implementation, refer to related descriptions in step S204a. Details are not described herein again.

It should be noted that when the RAN receives the second congestion information, and the congestion status of the RAN meets a reporting condition (for example, the data volume of the to-be-sent data flow in the RAN is greater than or equal to the first threshold), the RAN sends the second congestion information to the UE, and may send the first congestion information to the UE or the UPF network element. The RAN may send the first congestion information to the UE or send the first congestion information to the UPF network element based on the local configuration or the first notification manner. For a specific implementation, refer to related content in step S203. Details are not described herein again. For ease of description, in this embodiment, an example in which the RAN sends the first congestion information and the second congestion information to the UE is used.

S504a: The RAN sends the MAC-CE message to the UE; and correspondingly, the UE receives the MAC-CE message.

The RAN may send the first congestion information and the second congestion information to the UE. In this embodiment, the RAN sends the first congestion information and the second congestion information to the UE by using the MAC-CE message. It should be understood that the first congestion information and the second congestion information may be carried in a same MAC-CE message, or may be carried in different MAC-CE messages. This is not limited in this embodiment of this application. In FIG. 5, an example in which the first congestion information and the second congestion information are carried in one MAC-CE message is used.

For example, if the RAN receives the second congestion information, but the congestion status of the RAN does not meet the reporting condition, the RAN may send, to the UE, a MAC-CE message that carries the second congestion information. Then, when the congestion status of the RAN meets the reporting condition, the RAN further sends, to the UE, a MAC-CE message that carries the first congestion information. For another example, if the RAN does not receive the second congestion information, but the congestion status of the RAN meets the reporting condition, the RAN may send, to the UE, a MAC-CE message that carries the first congestion information. After receiving the second congestion information, the RAN sends, to the UE, a MAC-CE message that carries the second congestion information. For still another example, if the RAN receives the second congestion information, and the congestion status of the RAN meets the reporting condition, the RAN may send, to the UE, a MAC-CE message that carries the first congestion information and the second congestion information; or the RAN may separately send, to the UE, a MAC-CE message that carries the first congestion information and a MAC-CE message that carries the second congestion information.

In addition, the RAN may determine a logical channel that carries the MAC-CE message, and send the MAC-CE message to the UE through the determined logical channel. For a specific implementation, refer to related content in step S204a. Details are not described herein again.

The first congestion information indicates congestion information of the RAN. For example, the sending frequency of the first congestion information may indicate the congestion status of the RAN, content included in the first congestion information may indicate the congestion status of the RAN, or the sending frequency of the first congestion information and the content included in the first congestion information may indicate the congestion status of the RAN. For details, refer to the descriptions of the first congestion information in step S201. Details are not described herein again. In addition, for a specific implementation in which the RAN indicates the congestion status of the RAN based on at least one of the sending frequency of the first congestion information and the content included in the first congestion information, refer to the descriptions in step S204a. Details are not described herein again.

S504b: The RAN sends the higher layer signaling to the UE. Correspondingly, the UE receives the higher layer signaling.

The RAN may send the first congestion information and the second congestion information to the UE. In this embodiment, the RAN sends the first congestion information and the second congestion information to the UE by using the higher layer signaling. The higher layer signaling is, for example, RRC signaling, PDCP signaling, or SDAP signaling. It should be understood that the first congestion information and the second congestion information may be carried in same higher layer signaling, or may be carried in different higher layer signaling. This is not limited in this embodiment of this application. In FIG. 5, an example in which the first congestion information and the second congestion information are carried in one piece of higher layer signaling is used.

For example, if the RAN receives the second congestion information, but the congestion status of the RAN does not meet the reporting condition, the RAN may send, to the UE, higher layer signaling that carries the second congestion information. Then, when the congestion status of the RAN meets the reporting condition, the RAN further sends, to the UE, higher layer signaling that carries the first congestion information. For another example, if the RAN does not receive the second congestion information, but the congestion status of the RAN meets the reporting condition, the RAN may send, to the UE, higher layer signaling that carries the first congestion information. After receiving the second congestion information, the RAN sends, to the UE, a higher layer signaling message that carries the second congestion information. For still another example, if the RAN receives the second congestion information, and the congestion status of the RAN meets the reporting condition, the RAN may send, to the UE, higher layer signaling that carries the first congestion information and the second congestion information; or the RAN may separately send, to the UE, higher layer signaling that carries the first congestion information and higher layer signaling that carries the second congestion information.

In this case, the UE receives the first congestion information and the second congestion information. In this embodiment, the data flow of the target service may be an uplink data flow, that is, the transmitter of the data flow of the target service is the UE; or may be a downlink data flow, that is, the transmitter of the data flow of the target service is the AF network element. When the data flow of the target service is an uplink data flow, the UE performs content shown in step S505. When the data flow of the target service is a downlink data flow, the UE performs content shown in step S506.

S505: The UE adjusts a sending window of the data flow of the target service based on the first congestion information and the second congestion information.

The data flow of the target service is an uplink data flow. The UE may adaptively adjust the sending window of the data flow of the target service based on the first congestion information and the second congestion information, so that a transmission delay of the data flow of the target service can be reduced, and delay stability of the target service can be improved.

S506: The UE sends the first congestion information and the second congestion information to the AF network element. Correspondingly, the AF network element receives the first congestion information and the second congestion information.

The data flow of the target service is a downlink data flow. After receiving the first congestion information and the second congestion information, the UE may forward the first congestion information and the second congestion information to the AF network element.

S507: The AF network element adjusts the sending window of the data flow of the target service based on the first congestion information and the second congestion information.

The AF network element receives the first congestion information and the second congestion information, and may adaptively adjust the sending window of the data flow of the target service based on the first congestion information and the second congestion information, so that a transmission delay of the data flow of the target service can be reduced, and delay stability of the target service can be improved.

In the foregoing embodiment, the UPF network element reports the congestion status of the UPF network element through the RAN, the RAN reports the congestion status of the RAN, and the transmitter of the data flow of the target service properly adjusts the sending window of the data flow of the target service based on the congestion status of the UPF network element and the congestion status of the RAN, thereby reducing a transmission delay of the data flow of the target service and improving delay stability of the target service.

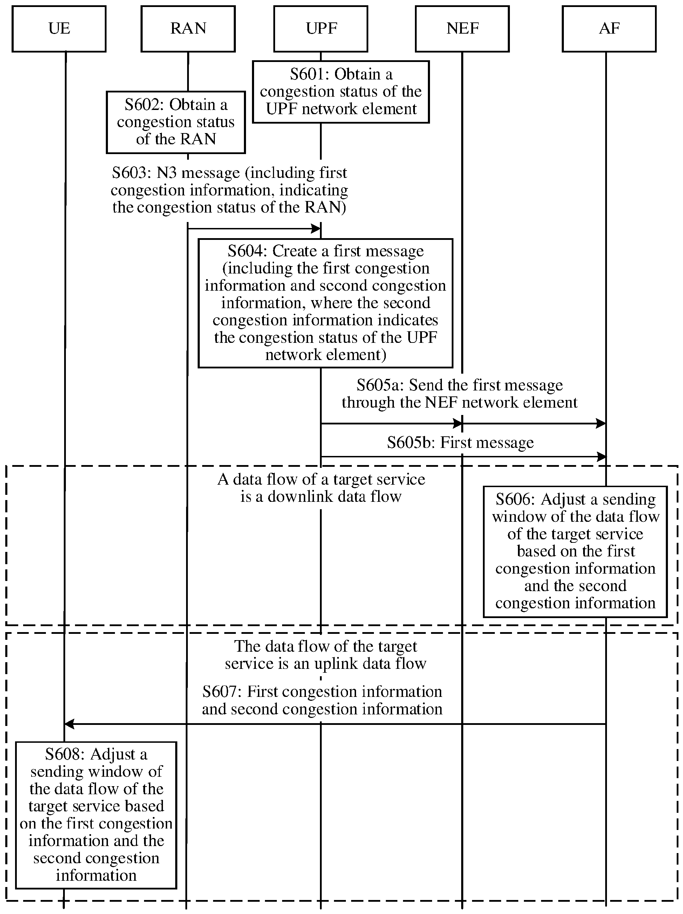

FIG. 6 is still another schematic flowchart of a communication method according to an embodiment of this application. In this embodiment, a RAN sends first congestion information to a UPF network element, and the UPF network element sends the first congestion information to a transmitter of a data flow of a target service. The data flow of the target service may be a downlink data flow, or may be an uplink data flow. In this embodiment, the UPF network element creates a first message, and sends the first message to an AF network element or sends the first message through an NEF network element. The first message includes the first congestion information and second congestion information.

Steps S601, S602, S606, and S608 are correspondingly the same as steps S502, S501, S507, and S505 in FIG. 5. A difference lies in that:

S603: The RAN sends an N3 message to the UPF network element. Correspondingly, the UPF network element receives the N3 message.

The RAN indicates a congestion status of the RAN based on the first congestion information, and sends the first congestion information to the UPF network element. Correspondingly, the UPF network element receives the first congestion information. For example, the RAN sends the first congestion information to the UPF network element by using the N3 message, and the N3 message includes the first congestion information. It may be understood that the RAN may alternatively send the first congestion information to the UPF network element by using a message other than the N3 message. This is not limited in this embodiment of this application. For example, the RAN may send the N3 message to the UPF network element based on the local configuration or a first notification manner. For example, when a data flow of a to-be-sent data in the RAN is greater than or equal to a first threshold, the RAN sends the N3 message to the UPF network element. For another example, when the first notification manner indicates to report the first congestion information by using the N3 message, the RAN sends the N3 message to the UPF network element. For a specific implementation of step S603, refer to related descriptions in step S204b. Details are not described herein again.

The first congestion information indicates congestion information of the RAN. For example, a sending frequency of the first congestion information indicates the congestion status of the RAN, content included in the first congestion information indicates the congestion status of the RAN, or the sending frequency of the first congestion information and the content included in the first congestion information indicate the congestion status of the RAN. For details, refer to the descriptions of the first congestion information in step S201. Details are not described herein again. In addition, for a specific implementation in which the RAN indicates the congestion status of the RAN based on at least one of the sending frequency of the first congestion information and the content included in the first congestion information, refer to the descriptions in step S204a. Details are not described herein again. Correspondingly, the UPF network element may obtain the congestion status of the RAN network element based on the sending frequency of the first congestion information and the content included in the first congestion information. It should be understood that, alternatively, the UPF network element may not obtain the congestion status of the RAN.

The UPF network element receives the first congestion information. Next, the UPF network element may create the first message, and send the first congestion information to the AF network element by using step S605a or step S605b. For example, the UPF network element may send the first congestion information to the AF network element through the NEF network element based on the local configuration or a second notification manner, that is, perform content shown in step S605a; or directly send the first congestion information to the AF network element, that is, perform content shown in step S605b. For a specific implementation, refer to related descriptions in step S304a. Details are not described herein again.

It should be noted that when the UPF network element receives the first congestion information, and the congestion status of the UPF network element meets the reporting condition (for example, the data volume of the to-be-sent data flow in the UPF network element is greater than or equal to the second threshold), the UPF network element sends the first congestion information to the AF network element, and may send the second congestion information to the RAN or the AF network element. The UPF network element may send the second congestion information to the RAN or send the second congestion information to the AF network element based on the local configuration or the second notification manner. For a specific implementation, refer to related content in step S303. Details are not described herein again. For ease of description, in this embodiment, an example in which the UPF network element sends the first congestion information and the second congestion information to the AF network element is used.

S604: The UPF network element creates the first message.

The UPF network element may create the first message. In this embodiment, the first message includes the first congestion information and the second congestion information. It should be understood that the first congestion information and the second congestion information may be carried in a same message, or may be carried in different messages. This is not limited in this embodiment of this application. In FIG. 6, an example in which the first congestion information and the second congestion information are carried in one message is used.

For example, if the UPF network element receives the first congestion information, but the congestion status of the UPF network element does not meet the reporting condition, the UPF network element may create a first message that carries the first congestion information. Then, when the congestion status of the UPF network element meets the reporting condition, the UPF network element further creates a first message that carries the second congestion information. For another example, if the UPF network element does not receive the first congestion information, but the congestion status of the UPF network element meets the reporting condition, the UPF network element creates a first message that carries the second congestion information. Then, after the UPF network element receives the first congestion information, the UPF network element further creates a first message that carries the first congestion information. For still another example, if the UPF network element receives the first congestion information, and the congestion status of the UPF network element meets the reporting condition, the UPF network element may create a first message that carries the first congestion information and the second congestion information; or the UPF network element may separately create a first message that carries the first congestion information and a first message that carries the second congestion information.

The UPF network element may construct the first message based on quintuple information of the data flow of the target service and an address of the UPF network element, based on the quintuple information of the data flow of the target service, or based on the quintuple information of the data flow of the target service and an AF network element address configured by the AF network element. For example, when the UPF network element reports the first congestion information and the second congestion information to the AF network element through the NEF network element, the UPF network element may construct the first message based on the quintuple information of the data flow of the target service and the address of the UPF network element. For another example, when the UPF network element reports the first congestion information and the second congestion information to the AF network element through a proxy, and the UE is unaware of the UPF network element, the UPF network element may construct the first message based on the quintuple information of the data flow of the target service. For still another example, when the UPF network element reports the first congestion information and the second congestion information to the AF network element through a proxy, and the UE is aware of the UPF network element, the UPF network element may construct the first message based on the quintuple information of the data flow of the target service and the AF network element address configured by the AF network element. For a specific implementation in which the UPF network element constructs the first message, refer to related descriptions in step S304a. Details are not described herein again.

The second congestion information indicates congestion information of the UPF network element. For example, the sending frequency of the second congestion information indicates the congestion status of the UPF network element, the content included in the second congestion information indicates the congestion status of the UPF network element, or the sending frequency of the second congestion information and the content included in the second congestion information indicate the congestion status of the UPF network element. For details, refer to the descriptions of the second congestion information in step S301. Details are not described herein again. In addition, for a specific implementation in which the UPF network element indicates the congestion status of the UPF network element based on at least one of the sending frequency of the second congestion information and the content included in the second congestion information, refer to the descriptions in step S304a. Details are not described herein again.

S605a: The UPF network element sends the first message to the AF network element through the NEF network element. Correspondingly, the AF network element receives the first message.

The UPF network element sends the first message to the AF network element through the NEF network element. For example, if the UPF network element and the NEF network element have a co-location relationship, the UPF network element sends the first message to the NEF network element. After receiving the first message, the NEF network element sends the first message to the AF network element. Correspondingly, the AF network element receives the first message. For another example, the UPF network element sends the first message to an SMF network element. After receiving the first message, the SMF network element forwards the first message to the NEF network element. The NEF network element sends the first message to the AF network element. Correspondingly, the AF network element receives the first message. When the data flow of the target service is a downlink data flow, a source address of the first message is the address of the UPF network element, and a destination address of the first message is a source address of the data flow of the target service. When the data flow of the target service is an uplink data flow, the source address of the first message is the address of the UPF network element, and a destination address of the first message is a source address of the data flow of the target service.

S605b: The UPF network element sends the first message to the AF network element. Correspondingly, the AF network element receives the first message.

The UPF network element sends the first message to the AF network element through the proxy. When the data flow of the target service is a downlink data flow and the UE is unaware of the UPF network element, a source address of the first message is a destination address of the data flow of the target service, and a destination address of the first message is a source address of the data flow of the target service. When the data flow of the target service is a downlink data flow and the UE is aware of the UPF network element, a source address of the first message is a destination address of the data flow of the target service, and a destination address of the first message is an AF network element address configured by the AF network element. When the data flow of the target service is an uplink data flow and the UE is unaware of the UPF network element, a source address of the first message is a source address of the data flow of the target service, and a destination address of the first message is a destination address of the data flow of the target service. When the data flow of the target service is an uplink data flow and the UE is aware of the UPF network element, a source address of the first message is a source address of the data flow of the target service, and a destination address of the first message is an AF network element address configured by the AF network element.

S607: The AF network element sends the first congestion information and the second congestion information to the UE. Correspondingly, the UE receives the first congestion information and the second congestion information.

The data flow of the target service is an uplink data flow. After receiving the first congestion information and the second congestion information, the AF network element may forward the first congestion information and the second congestion information to the UE.

In the foregoing embodiment, the RAN reports the congestion status of the RAN through the UPF network element, the UPF network element reports the congestion status of the UPF network element, and the transmitter of the data flow of the target service properly adjusts the sending window of the data flow of the target service based on the congestion status of the UPF network element and the congestion status of the RAN, thereby reducing a transmission delay of the data flow of the target service and improving delay stability of the target service. In addition, the UPF network element constructs the first message, and sends the first message to the AF network element through the NEF or through the proxy. The first message carries at least one of the first congestion information and the second congestion information, so that the congestion status of the UPF network element and the congestion status of the RAN can be reported in a timely manner, thereby improving real-time performance of reporting the congestion status.

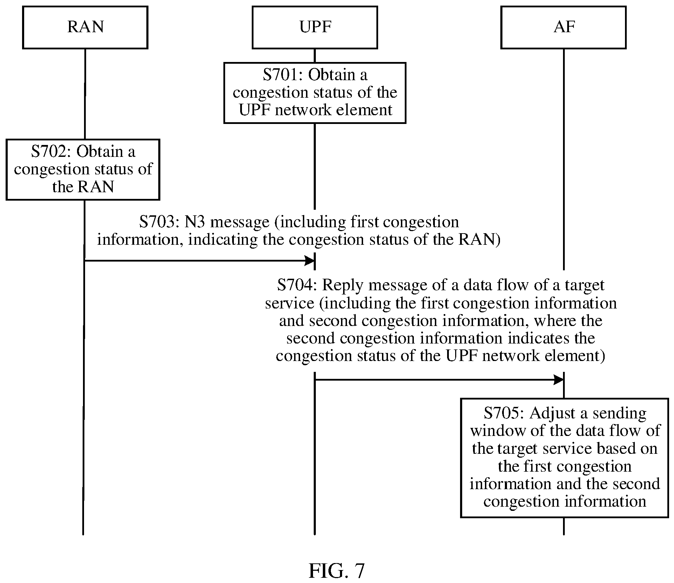

FIG. 7 is yet another schematic flowchart of a communication method according to an embodiment of this application. In this embodiment, a RAN sends first congestion information to a UPF network element, and the UPF network element sends the first congestion information to a transmitter of a data flow of a target service. The data flow of the target service is a downlink data flow. In this embodiment, the UPF network element sends the first congestion information and the second congestion information to an AF network element by using a reply message of the data flow of the target service.

Steps S701 to S703 and S705 are correspondingly the same as steps S601 to S603 and S606 in FIG. 6. A difference lies in that:

S704: The UPF network element sends the reply message of the data flow of the target service to the AF network element. Correspondingly, the AF network element receives the reply message of the data flow of the target service.

The data flow of the target service is a downlink data flow. The UPF network element may send the reply message of the data flow of the target service to the AF network element. In this embodiment, the reply message of the data flow of the target service includes the first congestion information and the second congestion information. For example, the UPF network element receives the reply message that is from UE and that is for the data flow of the target service, includes the first congestion information and the second congestion information in the reply message, and sends, to the AF network element, the reply message that carries the first congestion information and the second congestion information. Further, the UPF network element may determine, based on one or more of a protocol of the reply message, a quantity of reply messages, the second notification manner, and the like, a manner of reporting the first congestion information and the second congestion information. For a specific implementation, refer to related content in step S304a. Details are not described herein again.

It should be understood that the first congestion information and the second congestion information may be carried in a same reply message, or may be carried in different reply messages. This is not limited in this embodiment of this application. In FIG. 7, an example in which the first congestion information and the second congestion information are carried in one reply message is used.

For example, if the UPF network element receives the first congestion information and the reply message of the data flow of the target service, but the congestion status of the UPF network element does not meet the reporting condition, the UPF network element may include the first congestion information in the reply message, and send, to the AF network element, the reply message that carries the first congestion information. Then, when the congestion status of the UPF network element meets the reporting condition, the UPF network element may include the second congestion information in another reply message, and send, to the AF network element, the reply message that carries the second congestion information. For another example, if the UPF network element does not receive the first congestion information, but receives the reply message of the data flow of the target service, and the congestion status of the UPF network element meets the reporting condition, the UPF network element may include the second congestion information in the reply message, and send, to the AF network element, the reply message that carries the second congestion information. Then, after the UPF network element receives the first congestion information, the UPF network element may include the first congestion information in another reply message, and send, to the AF network element, the reply message that carries the first congestion information. For still another example, if the UPF network element receives the first congestion information and the reply message of the data flow of the target service, and the congestion status of the UPF network element meets the reporting condition, the UPF network element may include the first congestion information and the second congestion information in the reply message, and send, to the AF network element, the reply message that carries the first congestion information and the second congestion information. Alternatively, the UPF network element may include the first congestion information and the second congestion information in different reply messages, and send, to the AF network element, the reply message that carries the first congestion information and the reply message that carries the second congestion information.

In the foregoing embodiment, the data flow of the target service is a downlink data flow. The RAN reports the congestion status of the RAN through the UPF network element, the UPF network element reports the congestion status of the UPF network element, and the AF network element properly adjusts the sending window of the data flow of the target service based on the congestion status of the UPF network element and the congestion status of the RAN, thereby reducing a transmission delay of the data flow of the target service and improving delay stability of the target service. In addition, the UPF network element reports the first congestion information and the second congestion information to the AF network element by using the reply message of the data of the target service, so that the reply message is reused, and no new message needs to be constructed.

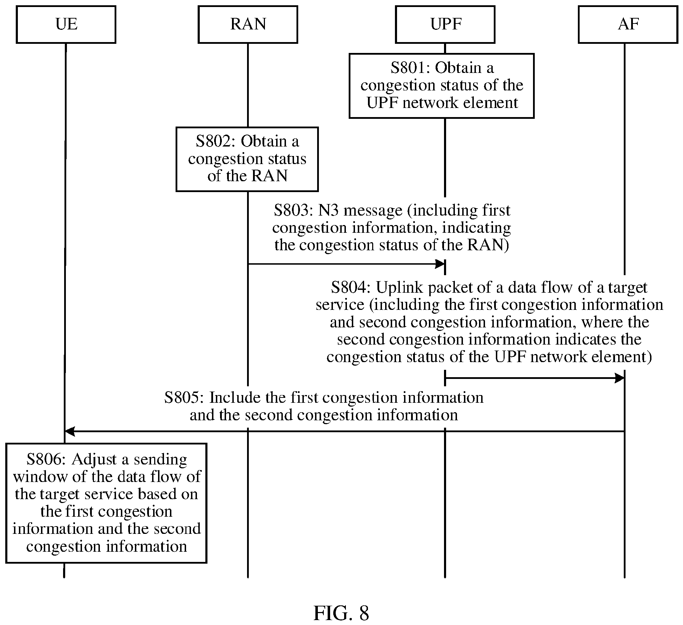

FIG. 8 is still another schematic flowchart of a communication method according to an embodiment of this application. In this embodiment, a RAN sends first congestion information to a UPF network element, and the UPF network element sends the first congestion information to a transmitter of a data flow of a target service. The data flow of the target service is an uplink data flow. In this embodiment, the UPF network element sends the first congestion information and second congestion information to an AF network element by using an uplink packet of the data flow of the target service, and sends a first message to an AF network element or send the first message through an NEF network element.

Steps S801 to S803 are correspondingly the same as steps S701 to S703 in FIG. 7. A difference lies in that:

S804: The UPF network element sends the uplink packet of the data flow of the target service to the AF network element. Correspondingly, the AF network element receives the uplink packet of the data flow of the target service.

In this embodiment, the data flow of the target service is an uplink data flow. The UPF network element may send the uplink packet of the data flow of the target service to the AF network element. In this embodiment, the uplink packet of the data flow of the target service includes the first congestion information and the second congestion information. For example, the UPF network element receives an uplink packet that is from UE and that is for the data flow of the target service, includes the first congestion information and the second congestion information in the uplink packet, and sends, to the AF network element, the uplink packet that carries the first congestion information and the second congestion information. For example, the UPF network element may add the second congestion information, for example, the data volume of the to-be-sent data in the UPF network element or the congestion level, to the uplink packet for the data of the target service.

It should be understood that the first congestion information and the second congestion information may be carried in a same uplink packet, or may be carried in different uplink packets. This is not limited in this embodiment of this application. In FIG. 8, an example in which the first congestion information and the second congestion information are carried in one uplink packet is used.

For example, if the UPF network element receives the first congestion information and the uplink packet of the data flow of the target service, but the congestion status of the UPF network element does not meet the reporting condition, the UPF network element may include the first congestion information in the uplink packet, and send, to the AF network element, the uplink packet that carries the first congestion information. Then, when the congestion status of the UPF network element meets the reporting condition, the UPF network element may include the second congestion information in another uplink packet, and send, to the AF network element, the uplink packet that carries the second congestion information. For another example, if the UPF network element does not receive the first congestion information, but receives the uplink packet of the data flow of the target service, and the congestion status of the UPF network element meets the reporting condition, the UPF network element may include the second congestion information in the uplink packet, and send, to the AF network element, the uplink packet that carries the second congestion information. Then, after the UPF network element receives the first congestion information, the UPF network element may include the first congestion information in another uplink packet, and send, to the AF network element, the uplink packet that carries the first congestion information. For still another example, if the UPF network element receives the first congestion information and the uplink packet of the data flow of the target service, and the congestion status of the UPF network element meets the reporting condition, the UPF network element may include the first congestion information and the second congestion information in the uplink packet, and send, to the AF network element, the uplink packet that carries the first congestion information and the second congestion information. Alternatively, the UPF network element may include the first congestion information and the second congestion information in different uplink packets, and send, to the AF network element, the uplink packet that carries the first congestion information and the uplink packet that carries the second congestion information.

S805: The AF network element sends the first congestion information and the second congestion information to the UE. Correspondingly, the UE receives the first congestion information and the second congestion information.

The data flow of the target service is an uplink data flow. After receiving the first congestion information and the second congestion information, the AF network element may forward the first congestion information and the second congestion information to the UE.

S806: The UE adjusts a sending window of the data flow of the target service based on the first congestion information and the second congestion information.

The UE may adaptively adjust the sending window of the data flow of the target service based on the first congestion information and the second congestion information, so that a transmission delay of the data flow of the target service can be reduced, and delay stability of the target service can be improved.

In the foregoing embodiment, the data flow of the target service is an uplink data flow. The RAN reports the congestion status of the RAN through the UPF network element, the UPF network element reports the congestion status of the UPF network element, and the UE properly adjusts the sending window of the data flow of the target service based on the congestion status of the UPF network element and the congestion status of the RAN, thereby reducing a transmission delay of the data flow of the target service and improving delay stability of the target service. In addition, the UPF network element sends the first congestion information and the second congestion information to the AF network element by using the uplink packet of the data of the target service, so that the data packet of the target service is reused, and no new message needs to be constructed.

It should be noted that execution steps in the foregoing embodiments are merely examples, and this embodiment of this application is not limited thereto. For example, in the embodiment shown in FIG. 4, the SMF network element first sends the second indication information to the UPF network element, and then sends the first indication information to the RAN; the SMF network element may first send the first indication information to the RAN, and then send the second indication information to the UPF network element; or the SMF network element sends both the first indication information to the RAN and the second indication information to the UPF network element. For another example, in the embodiment shown in FIG. 5, the RAN obtains the congestion status of the RAN before the UPF network element obtains the congestion status of the UPF network element; the UPF network element may obtain the congestion status of the UPF network element before the RAN obtains the congestion status of the RAN; or the RAN and the UPF network element obtain their respective congestion status at the same time.

The foregoing mainly describes the solutions provided in embodiments of this application from a perspective of a device and a perspective of device interaction. It may be understood that, to implement the foregoing functions, each device may include a corresponding hardware structure and/or software module for performing each function. A person skilled in the art should be easily aware that, with reference to the units and algorithm steps in the examples described in embodiments disclosed in this specification, embodiments of this application can be implemented by hardware or a combination of hardware and computer software. Whether a function is performed in a manner of hardware or computer software driving hardware depends on a specific application and an implementation constraint condition of the technical solution. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

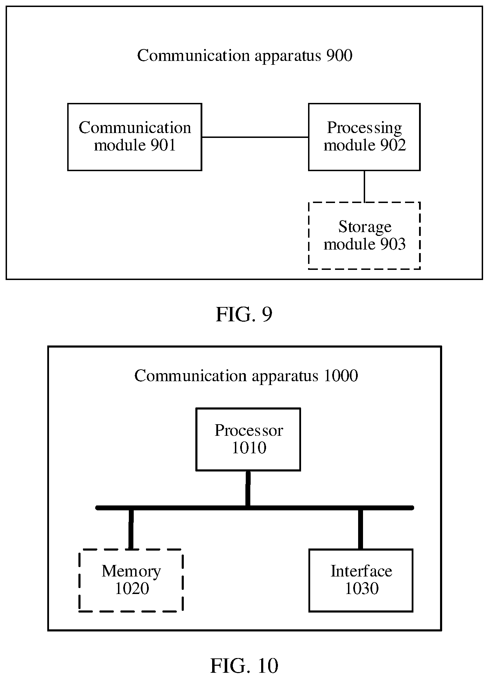

When an integrated unit is used, FIG. 9 is a possible example block diagram of a communication apparatus according to an embodiment of this application. As shown in FIG. 9, the communication apparatus 900 may include a communication module 901 and a processing module 902. The processing module 902 is configured to control and manage an action of the communication apparatus 900. The communication module 901 is configured to support the communication apparatus 900 in communicating with another device, for example, performing sending and receiving operations under control of the processing module 902. Optionally, the communication module 901 may be one module, or may be two modules, such as a receiving module and a sending module. Optionally, the communication module 901 may also be referred to as a communication unit, a transceiver module, a transceiver unit, an interface circuit, or the like. This is not limited in this embodiment of this application. Optionally, the communication apparatus 900 may further include a storage module 903, configured to store program code and/or data of the communication apparatus 900.

In an example, the processing module 902 may support the communication apparatus 900 in performing actions of the access network element, the user plane function network element, or the session management function network element in the foregoing method examples. Alternatively, the processing module 902 mainly performs internal actions of the access network element, the user plane function network element, or the session management function network element in the method examples.

For example, the communication apparatus 900 may be the access network element in the foregoing embodiments, or may be a component (such as a chip) of the access network element in the foregoing embodiments.

The communication module 901 is configured to receive first indication information from the session management function network element.

The processing module 902 is configured to: activate a congestion acquisition function of the communication apparatus based on the first indication information, where the congestion acquisition function is for obtaining a congestion status of the communication apparatus in a data flow transmission process of a target service; and obtain the congestion status of the communication apparatus.

The communication module 901 is further configured to send first congestion information to the user plane function network element or a terminal device, and indicate the congestion status of the communication apparatus based on the first congestion information.

In a possible implementation, the communication module 901 is further configured to:
receive second congestion information from the user plane function network element.

The processing module 902 is further configured to obtain a congestion status of the user plane function network element based on the second congestion information.

The communication module 901 is further configured to send the second congestion information to the terminal device.

In a possible implementation, when obtaining the congestion status of the user plane function network element based on the second congestion information, the processing module 902 is specifically configured to:
obtain the congestion status of the user plane function network element based on a receiving frequency of the second congestion information; or
the second congestion information includes at least one of a congestion level of the user plane function network element or a data volume of a to-be-sent data flow in the user plane function network element.

In a possible implementation, when sending the first congestion information to the terminal device, the communication module 901 is specifically configured to:
send the first congestion information to the terminal device by using a media access control control element message or higher layer signaling.

In a possible implementation, the processing module 902 is further configured to:
determine, based on a quality of service flow identifier of the target service, a correspondence between a quality of service flow identifier and a data radio bearer identifier, and a correspondence between a data radio bearer identifier and a logical channel identifier, a logical channel that carries the media access control control element message.

In a possible implementation, when indicating the congestion status of the communication apparatus based on the first congestion information, the processing module 902 is specifically configured to:
indicate the congestion status of the communication apparatus based on a sending frequency of the first congestion information; or
the first congestion information includes one or more of the following information: a congestion level of the communication apparatus, a data volume of a to-be-sent data flow in the communication apparatus, a channel quality indicator of a channel between the communication apparatus and the terminal device, an air interface delay between the communication apparatus and the terminal device, or a transmission mode in which the communication apparatus sends the data flow.

In a possible implementation, the processing module 902 is further configured to:
activate a notification function of the communication apparatus based on the first indication information, where the notification function is for sending the congestion status of the communication apparatus to the user plane function network element or the terminal device.

In a possible implementation, the communication module 901 is further configured to:
receive at least one of a first congestion acquisition manner or a first notification manner from the session management function network element.

When the first congestion acquisition is received, the processing module 902 is further configured to determine, based on the first congestion acquisition manner, to obtain the congestion status of the communication apparatus based on at least one of the data volume of the to-be-sent data flow in the communication apparatus or usage of an air interface resource.

When the first notification manner is received, the processing module 902 is further configured to determine at least one of the following based on the first notification manner: to send the congestion status of the communication apparatus to the user plane function network element or the terminal device when the data volume of the to-be-sent data flow is greater than or equal to a first threshold, to indicate the congestion status of the communication apparatus based on the first congestion information, or a message that carries the first congestion information.

In a possible implementation, when obtaining the congestion status of the communication apparatus, the processing module 902 is specifically configured to:
obtain the congestion status of the communication apparatus based on at least one of the data volume of the to-be-sent data flow in the communication apparatus or the usage of the air interface resource.

For another example, the communication apparatus 900 may be the user plane function network element in the foregoing embodiments, or may be a component (such as a chip) of the user plane function network element in the foregoing embodiments.

The communication module 901 is configured to receive second indication information from a session management function network element.

The processing module 902 is configured to: activate a congestion acquisition function of the communication apparatus based on the second indication information, where the congestion acquisition function is for obtaining a congestion status of the communication apparatus in a data flow transmission process of a target service; and obtain the congestion status of the communication apparatus.

The communication module 901 is further configured to send second congestion information to an application function network element or an access network element, where the second congestion information indicates the congestion status of the communication apparatus.

In a possible implementation, the communication module 901 is further configured to:
receive first congestion information from the access network element.

The processing module 902 is further configured to obtain a congestion status of the access network element based on the first congestion information.

The communication module 901 is further configured to send the first congestion information to the application function network element.

In a possible implementation, when obtaining the congestion status of the access network element based on the first congestion information, the processing module 902 is specifically configured to:
obtain the congestion status of the access network element based on a receiving frequency of the first congestion information; or
the first congestion information includes one or more of the following information: a congestion level of the access network element, a data volume of a to-be-sent data flow in the access network element, a channel quality indicator of a channel between the access network element and the terminal device, an air interface delay between the access network element and the terminal device, or a transmission mode in which the access network element sends the data flow.

In a possible implementation, the processing module 902 is further configured to:
generate a first message that carries the second congestion information.

The communication module 901 is configured to send the first message to the application function network element, where
when the data flow is a downlink data flow, a source address of the first message is a destination address of the data flow, and a destination address of the first message is a source address of the data flow;
when the data flow is a downlink data flow, a source address of the first message is a destination address of the data flow, and a destination address of the first message is an application function network element address configured by the application function network element;
when the data flow is an uplink data flow, a source address of the first message is a source address of the data flow, and a destination address of the first message is a destination address of the data flow; or
when the data flow is an uplink data flow, a source address of the first message is a source address of the data flow, and a destination address of the first message is an application function network element address configured by the application function network element.

In a possible implementation, when sending the second congestion information to the application function network element, the communication module 901 is specifically configured to:
when the data flow is a downlink data flow, send the second congestion information to the application function network element by using a reply message of the data flow; or
when the data flow is an uplink data flow, send the second congestion information to the application function network element by using an uplink packet that carries data of the target service.

In a possible implementation, when indicating the congestion status of the user plane function network element based on the second congestion information, the processing module 902 is specifically configured to:
indicate the congestion status of the communication apparatus based on a sending frequency of the second congestion information; or
the second congestion information includes at least one of a congestion level of the communication apparatus or a data volume of a to-be-sent data flow in the communication apparatus.

In a possible implementation, the processing module 902 is further configured to:
activate a notification function of the communication apparatus based on the second indication information, where the notification function of the communication apparatus is for sending the congestion status of the communication apparatus to the application function network element or the access network element.

In a possible implementation, the communication module 901 is further configured to:
receive at least one of a second congestion acquisition manner or a second notification manner from the session management function network element.

When the second congestion acquisition manner is received, the processing module 902 is further configured to determine, based on the second congestion acquisition manner, to obtain the congestion status of the communication apparatus based on the data volume of the to-be-sent data flow in the communication apparatus.

When the second notification manner is received, the processing module 902 is further configured to determine at least one of the following based on the second notification manner: to send the congestion status of the communication apparatus to the application function network element or the access network element when the data volume of the to-be-sent data flow is greater than or equal to a second threshold, to indicate the congestion status of the communication apparatus based on the second congestion information, or a message that carries the second congestion information.

In a possible implementation, when obtaining the congestion status of the communication apparatus, the processing module 902 is specifically configured to:
obtain the congestion status of the communication apparatus based on the data volume of the to-be-sent data flow in the communication apparatus.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented by using a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented by using the chip, the sending unit is an interface circuit that is of the chip and that is configured to send a signal to another chip or apparatus.

FIG. 10 is a diagram of a communication apparatus according to an embodiment of this application. The communication apparatus is configured to implement operations of the access network element, the user plane function network element, or the session management function network element in the foregoing embodiments. The communication apparatus 1000 includes a processor 1010 and an interface 1030. Optionally, the communication apparatus 1000 further includes a memory 1020. The interface 1030 is configured to communicate with another device.

In the foregoing embodiments, the method performed by the access network element, the user plane function network element, or the session management function network element may be implemented by the processor 1010 by invoking a program stored in a memory (which may be the memory 1020 in the access network element, the user plane function network element, or the session management function network element, or may be an external memory). In other words, the communication apparatus 1000 configured to implement a function of the access network element, the user plane function network element, or the session management function network element may include the processor 1010. The processor 1010 invokes the program in the memory to perform the method performed by the access network element, the user plane function network element, or the session management function network element in the foregoing method embodiments. The processor herein may be an integrated circuit having a signal processing capability, for example, a CPU. An apparatus used in the access network element, the user plane function network element, or the session management function network element may be implemented by configuring one or more integrated circuits for implementing the foregoing method, for example, one or more ASICs, one or more microprocessors DSPs, one or more FPGAs, or a combination of at least two of the integrated circuit forms. Alternatively, the foregoing implementations may be combined.

When the communication apparatus 1000 is used in the foregoing method, the processor 1010 is configured to implement a function of the processing module 902, and the interface 1030 is configured to implement a function of the transceiver module 901.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by using a general-purpose processor, a digital signal processor, an application-specific integrated circuit (ASIC), a field programmable gate array (FPGA) or another programmable logic apparatus, a discrete gate or transistor logic, a discrete hardware component, or any implementation of the foregoing combinations. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a random access memory (random access memory, RAM), a flash memory, a read-only memory (read-only memory, ROM), an EPROM memory, an EEPROM memory, a register, a hard disk, a removable disc, a CD-ROM, or any other form of storage media in the art. For example, the storage medium may connect to a processor so that the processor may read information from the storage medium and write information to the storage medium. Optionally, the storage medium may be integrated into a processor. The processor and the storage media may be disposed in an ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In one or more example implementations, the foregoing functions described in embodiments of this application may be implemented by using hardware, software, firmware, or any combination of the three. If the present invention is implemented by software, these functions may be stored in a computer-readable medium or are transmitted to the computer-readable medium in a form of one or more instructions or code. The computer-readable medium is either a computer storage medium or a communication medium that enables a computer program to move from one place to another. The storage media may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be for carrying or storing program code, where the program code is in a form of an instruction or a data structure or in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and disk (disc) include a compressed disk, a laser disk, an optical disc, a digital versatile disc (digital versatile disc, DVD), a floppy disk, and a Blu-ray disc. The disc usually copies data magnetically. The disk usually optically reproduces data by laser. The foregoing combination may also be included in the computer-readable medium.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application. The foregoing descriptions in the specification of this application may enable any technology in the art to utilize or implement the content of embodiments of this application, and any modification based on the disclosed content shall be considered clear in this field. The basic principles described in embodiments of this application may be applied to other variations without departing from the essence and scope of the invention of this application. Therefore, content disclosed in embodiments of this application is not limited to the described embodiments and implementations, and may be extended to a maximum range consistent with the principles of this application and the disclosed new features.

Although this application is described with reference to specific features and embodiments thereof, it is clear that various modifications and combinations may be made to embodiments of this application without departing from the spirit and scope of embodiments of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. Therefore, provided that the modifications and variations in embodiments of this application fall within the scope of the claims of this application and their equivalent technologies, embodiments of this application are also intended to include the modifications and variations.

## Claims

1. A communication method, comprising:
receiving, by an access network element, first indication information from a session management function network element;
activating, by the access network element, a congestion acquisition function of the access network element based on the first indication information, wherein the congestion acquisition function is for obtaining a congestion status of the access network element in a data flow transmission process of a target service;
obtaining, by the access network element, the congestion status of the access network element; and
sending, by the access network element, first congestion information to a user plane function network element or a terminal device, and indicating the congestion status of the access network element based on the first congestion information.

2. The method according to claim 1, wherein the method further comprises:
receiving, by the access network element, second congestion information from the user plane function network element;
obtaining, by the access network element, a congestion status of the user plane function network element based on the second congestion information; and
sending, by the access network element, the second congestion information to the terminal device.

3. The method according to claim 2, wherein
the obtaining, by the access network element, a congestion status of the user plane function network element based on the second congestion information comprises:
obtaining, by the access network element, the congestion status of the user plane function network element based on a receiving frequency of the second congestion information; or
the second congestion information comprises at least one of a congestion level of the user plane function network element or a data volume of a to-be-sent data flow in the user plane function network element.

4. The method according to any one of claims 1 to 3, wherein the sending, by the access network element, first congestion information to a terminal device comprises:
sending, by the access network element, the first congestion information to the terminal device by using a media access control control element message or higher layer signaling.

5. The method according to claim 4, wherein the method further comprises:
determining, by the access network element based on a quality of service flow identifier of the target service, a correspondence between a quality of service flow identifier and a data radio bearer identifier, and a correspondence between a data radio bearer identifier and a logical channel identifier, a logical channel that carries the media access control control element message.

6. The method according to any one of claims 1 to 5, wherein the indicating, by the access network element, the congestion status of the access network element based on the first congestion information comprises:
indicating, by the access network element, the congestion status of the access network element based on a sending frequency of the first congestion information; or
the first congestion information comprises one or more of the following information: a congestion level of the access network element, a data volume of a to-be-sent data flow in the access network element, a channel quality indicator of a channel between the access network element and the terminal device, an air interface delay between the access network element and the terminal device, or a transmission mode in which the access network element sends the data flow.

7. The method according to any one of claims 1 to 6, wherein the method further comprises:
activating, by the access network element, a notification function of the access network element based on the first indication information, wherein the notification function of the access network element is for sending the congestion status of the access network element to the user plane function network element or the terminal device.

8. The method according to any one of claims 1 to 7, wherein the method further comprises:
receiving, by the access network element, at least one of a first congestion acquisition manner or a first notification manner from the session management function network element;
when the access network element receives the first congestion acquisition manner, determining, by the access network element based on the first congestion acquisition manner, to obtain the congestion status of the access network element based on at least one of the data volume of the to-be-sent data flow in the access network element or usage of an air interface resource; and
when the access network element receives the first notification manner, determining, by the access network element, at least one of the following based on the first notification manner: to send the congestion status of the access network element to the user plane function network element or the terminal device when the data volume of the to-be-sent data flow is greater than or equal to a first threshold, to indicate the congestion status of the access network element based on the first congestion information, or a message that carries the first congestion information.

9. The method according to any one of claims 1 to 8, wherein the obtaining, by the access network element, the congestion status of the access network element comprises:
obtaining, by the access network element, the congestion status of the access network element based on at least one of the data volume of the to-be-sent data flow in the access network element or the usage of the air interface resource.

10. A communication method, comprising:
receiving, by a user plane function network element, second indication information from a session management function network element;
activating, by the user plane function network element, a congestion acquisition function of the user plane function network element based on the second indication information, wherein the congestion acquisition function is for obtaining a congestion status of the user plane function network element in a data flow transmission process of a target service;
obtaining, by the user plane function network element, the congestion status of the user plane function network element; and
sending, by the user plane function network element, second congestion information to an application function network element or an access network element, and indicating the congestion status of the user plane function network element based on the second congestion information.

11. The method according to claim 10, wherein the method further comprises:
receiving, by the user plane function network element, first congestion information from the access network element;
obtaining, by the user plane function network element, a congestion status of the access network element based on the first congestion information; and
sending, by the user plane function network element, the first congestion information to the application function network element.

12. The method according to claim 11, wherein the obtaining, by the user plane function network element, a congestion status of the access network element based on the first congestion information comprises:
obtaining, by the user plane function network element, the congestion status of the access network element based on a receiving frequency of the first congestion information; or
the first congestion information comprises one or more of the following information: a congestion level of the access network element, a data volume of a to-be-sent data flow in the access network element, a channel quality indicator of a channel between the access network element and a terminal device, an air interface delay between the access network element and the terminal device, or a transmission mode in which the access network element sends the data flow.

13. The method according to any one of claims 10 to 12, wherein the sending, by the user plane function network element, second congestion information to an application function network element comprises:
sending, by the user plane function network element, the second congestion information to the application function network element through a network exposure function network element, wherein the second congestion information comprises identification information of the terminal device and identification information of the target service.

14. The method according to any one of claims 10 to 12, wherein the sending, by the user plane function network element, second congestion information to an application function network element comprises:
generating, by the user plane function network element, a first message that carries the second congestion information; and
sending, by the user plane function network element, the first message to the application function network element, wherein
when the data flow is a downlink data flow, a source address of the first message is a destination address of the data flow, and a destination address of the first message is a source address of the data flow;
when the data flow is a downlink data flow, a source address of the first message is a destination address of the data flow, and a destination address of the first message is an application function network element address configured by the application function network element;
when the data flow is an uplink data flow, a source address of the first message is a source address of the data flow, and a destination address of the first message is a destination address of the data flow; or
when the data flow is an uplink data flow, a source address of the first message is a source address of the data flow, and a destination address of the first message is an application function network element address configured by the application function network element.

15. The method according to any one of claims 10 to 12, wherein the sending, by the user plane function network element, second congestion information to an application function network element comprises:
when the data flow is a downlink data flow, sending, by the user plane function network element, the second congestion information to the application function network element by using a reply message of the data flow; or
when the data flow is an uplink data flow, sending, by the user plane function network element, the second congestion information to the application function network element by using an uplink packet that carries data of the target service.

16. The method according to any one of claims 10 to 15, wherein the indicating, by the user plane function network element, the congestion status of the user plane function network element based on the second congestion information comprises:
indicating, by the user plane function network element, the congestion status of the user plane function network element based on a sending frequency of the second congestion information; or
the second congestion information comprises at least one of a congestion level of the user plane function network element or a data volume of a to-be-sent data flow in the user plane function network element.

17. The method according to any one of claims 10 to 16, wherein the method further comprises:
activating, by the user plane function network element, a notification function of the user plane function network element based on the second indication information, wherein the notification function of the user plane function network element is for sending the congestion status of the user plane function network element to the application function network element or the access network element.

18. The method according to any one of claims 10 to 17, wherein the method further comprises:
receiving, by the user plane function network element, at least one of a second congestion acquisition manner or a second notification manner from the session management function network element;
when the user plane function network element receives the second congestion acquisition manner, determining, by the user plane function network element based on the second congestion acquisition manner, to obtain the congestion status of the user plane function network element based on the data volume of the to-be-sent data flow in the user plane function network element; and
when the user plane function network element receives the second notification manner, determining, by the user plane function network element at least one of the following based on the second notification manner: to send the congestion status of the user plane function network element to the application function network element or the access network element when the data volume of the to-be-sent data flow is greater than or equal to a second threshold, to indicate the congestion status of the user plane function network element based on the second congestion information, or a message that carries the second congestion information.

19. The method according to any one of claims 10 to 18, wherein the obtaining, by the user plane function network element, the congestion status of the user plane function network element comprises:
obtaining, by the user plane function network element, the congestion status of the user plane function network element based on the data volume of the to-be-sent data flow in the user plane function network element.

20. A communication apparatus, comprising a communication module and a processing module, wherein
the communication module is configured to receive first indication information from a session management function network element;
the processing module is configured to: activate a congestion acquisition function of the communication apparatus based on the first indication information, wherein the congestion acquisition function is for obtaining a congestion status of the communication apparatus in a data flow transmission process of a target service; and obtain the congestion status of the communication apparatus; and
the communication module is further configured to send first congestion information to a user plane function network element or a terminal device, and indicate the congestion status of the communication apparatus based on the first congestion information.

21. The communication apparatus according to claim 20, wherein the communication module is further configured to:
receive second congestion information from the user plane function network element;
the processing module is further configured to obtain a congestion status of the user plane function network element based on the second congestion information; and
the communication module is further configured to send the second congestion information to the terminal device.

22. The communication apparatus according to claim 20 or 21, wherein when obtaining the congestion status of the user plane function network element based on the second congestion information, the processing module is specifically configured to:
obtain the congestion status of the user plane function network element based on a receiving frequency of the second congestion information; or
the second congestion information comprises at least one of a congestion level of the user plane function network element or a data volume of a to-be-sent data flow in the user plane function network element.

23. The communication apparatus according to any one of claims 20 to 22, wherein when sending the first congestion information to the terminal device, the communication module is specifically configured to:
send the first congestion information to the terminal device by using a media access control control element message or higher layer signaling.

24. The communication apparatus according to claim 23, wherein the processing module is further configured to:
determine, based on a quality of service flow identifier of the target service, a correspondence between a quality of service flow identifier and a data radio bearer identifier, and a correspondence between a data radio bearer identifier and a logical channel identifier, a logical channel that carries the media access control control element message.

25. The communication apparatus according to any one of claims 20 to 24, wherein when indicating the congestion status of the communication apparatus based on the first congestion information, the processing module is specifically configured to:
indicate the congestion status of the communication apparatus based on a sending frequency of the first congestion information; or
the first congestion information comprises one or more of the following information: a congestion level of the communication apparatus, a data volume of a to-be-sent data flow in the communication apparatus, a channel quality indicator of a channel between the communication apparatus and the terminal device, an air interface delay between the communication apparatus and the terminal device, or a transmission mode in which the communication apparatus sends the data flow.

26. The communication apparatus according to any one of claims 20 to 25, wherein the processing module is further configured to:
activate a notification function of the communication apparatus based on the first indication information, wherein the notification function is for sending the congestion status of the communication apparatus to the user plane function network element or the terminal device.

27. The communication apparatus according to any one of claims 20 to 26, wherein the communication module is further configured to:
receive at least one of a first congestion acquisition manner or a first notification manner from the session management function network element;
when the first congestion acquisition is received, the processing module is further configured to determine, based on the first congestion acquisition manner, to obtain the congestion status of the communication apparatus based on at least one of the data volume of the to-be-sent data flow in the communication apparatus or usage of an air interface resource; and
when the first notification manner is received, the processing module is further configured to determine at least one of the following based on the first notification manner: to send the congestion status of the communication apparatus to the user plane function network element or the terminal device when the data volume of the to-be-sent data flow is greater than or equal to a first threshold, to indicate the congestion status of the communication apparatus based on the first congestion information, or a message that carries the first congestion information.

28. The communication apparatus according to any one of claims 20 to 27, wherein when obtaining the congestion status of the communication apparatus, the processing module is specifically configured to:
obtain the congestion status of the communication apparatus based on at least one of the data volume of the to-be-sent data flow in the communication apparatus or the usage of the air interface resource.

29. A communication apparatus, comprising a communication module and a processing module, wherein
the communication module is configured to receive second indication information from a session management function network element;
the processing module is configured to: activate a congestion acquisition function of the communication apparatus based on the second indication information, wherein the congestion acquisition function is for obtaining a congestion status of the communication apparatus in a data flow transmission process of a target service; and obtain the congestion status of the communication apparatus; and
the communication module is further configured to send second congestion information to an application function network element or an access network element, wherein the second congestion information indicates the congestion status of the communication apparatus.

30. The communication apparatus according to claim 29, wherein the communication module is further configured to:
receive first congestion information from the access network element;
the processing module is further configured to obtain a congestion status of the access network element based on the first congestion information; and
the communication module is further configured to send the first congestion information to the application function network element.

31. The communication apparatus according to claim 30, wherein when obtaining the congestion status of the access network element based on the first congestion information, the processing module is specifically configured to:
obtain the congestion status of the access network element based on a receiving frequency of the first congestion information; or
the first congestion information comprises one or more of the following information: a congestion level of the access network element, a data volume of a to-be-sent data flow in the access network element, a channel quality indicator of a channel between the access network element and a terminal device, an air interface delay between the access network element and the terminal device, or a transmission mode in which the access network element sends the data flow.

32. The communication apparatus according to any one of claims 29 to 31, wherein when sending the second congestion information to the application function network element, the communication module is specifically configured to:
send the second congestion information to the application function network element based on a network exposure function network element, wherein the second congestion information comprises identification information of the terminal device and identification information of the target service.

33. The communication apparatus according to any one of claims 29 to 31, wherein the processing module is further configured to:
generate a first message that carries the second congestion information; and
the communication module is configured to send the first message to the application function network element, wherein
when the data flow is a downlink data flow, a source address of the first message is a destination address of the data flow, and a destination address of the first message is a source address of the data flow;
when the data flow is a downlink data flow, a source address of the first message is a destination address of the data flow, and a destination address of the first message is an application function network element address configured by the application function network element;
when the data flow is an uplink data flow, a source address of the first message is a source address of the data flow, and a destination address of the first message is a destination address of the data flow; or
when the data flow is an uplink data flow, a source address of the first message is a source address of the data flow, and a destination address of the first message is an application function network element address configured by the application function network element.

34. The communication apparatus according to any one of claims 29 to 31, wherein when sending the second congestion information to the application function network element, the communication module is specifically configured to:
when the data flow is a downlink data flow, send the second congestion information to the application function network element by using a reply message of the data flow; or
when the data flow is an uplink data flow, send the second congestion information to the application function network element by using an uplink packet that carries data of the target service.

35. The communication apparatus according to any one of claims 29 to 34, wherein when indicating the congestion status of the user plane function network element based on the second congestion information, the processing module is specifically configured to:
indicate the congestion status of the communication apparatus based on a sending frequency of the second congestion information; or
the second congestion information comprises at least one of a congestion level of the communication apparatus or a data volume of a to-be-sent data flow in the communication apparatus.

36. The communication apparatus according to any one of claims 29 to 35, wherein the processing module is further configured to:
activate a notification function of the communication apparatus based on the second indication information, wherein the notification function of the communication apparatus is for sending the congestion status of the communication apparatus to the application function network element or the access network element.

37. The communication apparatus according to any one of claims 29 to 36, wherein the communication module is further configured to:
receive at least one of a second congestion acquisition manner or a second notification manner from the session management function network element;
when the second congestion acquisition manner is received, the processing module is further configured to determine, based on the second congestion acquisition manner, to obtain the congestion status of the communication apparatus based on the data volume of the to-be-sent data flow in the communication apparatus; and
when the second notification manner is received, the processing module is further configured to determine at least one of the following based on the second notification manner: to send the congestion status of the communication apparatus to the application function network element or the access network element when the data volume of the to-be-sent data flow is greater than or equal to a second threshold, to indicate the congestion status of the communication apparatus based on the second congestion information, or a message that carries the second congestion information.

38. The communication apparatus according to any one of claims 29 to 37, wherein when obtaining the congestion status of the communication apparatus, the processing module is specifically configured to:
obtain the congestion status of the communication apparatus based on the data volume of the to-be-sent data flow in the communication apparatus.

39. A communication apparatus, comprising a memory and one or more processors, wherein the memory is coupled to the one or more processors; and
the memory is configured to store a computer program or instructions; and when the computer program or the instructions are executed by the one or more processors, the communication apparatus is enabled to perform the method according to any one of claims 1 to 9.

40. A communication apparatus, comprising a memory and one or more processors, wherein the memory is coupled to the one or more processors; and
the memory is configured to store a computer program or instructions; and when the computer program or the instructions are executed by the one or more processors, the communication apparatus is enabled to perform the method according to any one of claims 10 to 19.

41. A computer-readable storage medium, wherein the computer-readable storage medium stores instructions; and when the instructions are run on a computer, the computer is enabled to perform the method according to any one of claims 1 to 9.

42. A computer-readable storage medium, wherein the computer-readable storage medium stores instructions; and when the instructions are run on a computer, the computer is enabled to perform the method according to any one of claims 10 to 19.

43. A communication system, wherein the communication system comprises the communication apparatus according to any one of claims 20 to 28 and the communication apparatus according to any one of claims 29 to 38.
